(19) Europäisches Patentamt
European Patent Office
Office européen des brevets

(11) **EP 3 647 215 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **19205105.0**

(22) Anmeldetag: **24.10.2019**

(51) Internationale Patentklassifikation (IPC):
**B65D 1/02** (2006.01) **B32B 17/06** (2006.01)
**C03C 3/00** (2006.01) **C03C 21/00** (2006.01)

(52) Gemeinsame Patentklassifikation (CPC):
**B65D 1/0207; C03C 21/00**

(54) **BEHÄLTER AUS GLAS SOWIE VERFAHREN ZU DESSEN HERSTELLUNG**

CONTAINER MADE OF GLASS AND METHOD FOR THE PRODUCTION THEREOF

RÉCIPIENT DE VERRE AINSI QUE SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2018 DE 102018127528**

(43) Veröffentlichungstag der Anmeldung:
**06.05.2020 Patentblatt 2020/19**

(73) Patentinhaber: **SCHOTT AG**
**55122 Mainz (DE)**

(72) Erfinder:
• **LANGSDORF, Andreas**
**55218 Ingelheim (DE)**
• **TRATZKY, Stephan**
**92660 Neustadt/Wn. (DE)**
• **MAURER, Florian**
**64347 Griesheim (DE)**
• **THOMAS, Peter**
**56073 Koblenz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A1-2013/130721    DE-A1-102016 113 825
DE-A1-102016 113 826    DE-U1-202012 012 875

**Beschreibung**

Die vorliegende Erfindung betrifft allgemein einen Behälter aus Glas, insbesondere mit besonderer Festigkeit, vorzugsweise für die Aufnahme eines Präparates, insbesondere eines kosmetischen, medizinischen oder pharmazeutischen Präparates, sowie ein Verfahren zu dessen Herstellung.

Behälter oder sogenannte Primärverpackungen aus Glas für die Aufnahme eines kosmetischen, medizinischen oder pharmazeutischen Präparates sind weithin bekannt und können in unterschiedlichen Geometrien und Qualitätsstufen zur Verfügung gestellt werden. Derartige Behälter bieten sich zur Lagerung, zum Transport oder auch zum Verabreichen des Präparates an. Sie können beispielsweise als Karpule, Fläschchen oder Ampulle in hohen Stückzahlen kostengünstig gefertigt werden.

Derartige Behälter können nicht nur aus Glas, sondern beispielsweise auch aus Kunststoff gefertigt sein, wobei Behälter aus Glas allerdings Vorteile, etwa in Bezug auf die Langlebigkeit der Verpackung oder potentielle Verunreinigungen eingefüllter Präparate aufweisen, da Glas chemisch inert ist.

Behälter aus Glas werden im Allgemeinen vor dem Befüllen gereinigt und sodann gefüllt, verschlossen und transportiert bzw. in größere Gebinde verpackt. Hierzu stehen geeignete, in der Regel vollautomatisch arbeitende Vorrichtungen zur Verfügung.

Die Behälter werden hierbei besonderen Belastungen ausgesetzt. Zum einen kann es bei dem Transportieren zu gegenseitigen Berührungen und Stößen kommen, wodurch die Behälter auch größeren radial oder axial wirkenden Kräften ausgesetzt werden können. Dadurch kann es zu Beschädigungen der Oberfläche, etwa in Form von Kratzern auf der Außenoberfläche des Behälters, oder auch zu Rissen kommen. Mitunter kann es bei höheren einwirkenden Kräften oder Stößen auch zu einem Bruch des Behälters kommen, insbesondere, wenn dieser aus Glas gefertigt ist. Gerade bei pharmazeutischen Primärverpackungen ist dies ein großes Problem, insbesondere in Bezug auf die gebotenen Reinheitserfordernisse.

Weiterhin relevant für einen pharmazeutischen Container kann der Innendruck sein, der bei einem Befüllen des Behälters etwa mit flüssigen Präparaten auf diesen Behälter einwirken kann. Ein zu hoher Druck beim Befüllen oder bei der Lyophilisation kann unter ungünstigen Umständen zu einem Bersten des Behälters führen. Dieses Problem wird noch verschärft, wenn der Behälter bereits Vorschädigungen, beispielsweise durch die vorstehend genannten Kräfte, aufweist.

Eine eigene Lösung schlägt das Dokument WO 2013/130721 A1 vor. Hier wird ein Glascontainer aus Alumosilikatglas vorgeschlagen, welcher zumindest über eine vorgespannte Seitenwand verfügt. Mittels dieser Vorspannung soll sichergestellt werden, dass es bei der Ausbildung eines Risses, welcher sich durch die Seitenwand erstreckt und die Sterilität innerhalb des Behälters gefährden kann, zu einer so starken Schädigung des Behälters kommt, dass dessen gebrauchsgemäße weitere Verwendung ausgeschlossen ist. Es wird offenbart, hierzu eine Zugspannung in die Seitenwand, insbesondere in deren mittigen Bereich einzubringen, welche oberhalb eines Schwellenwerts von 15 MpPa liegt und es werden bei den Ausführungsbeispielen lediglich Behälter mit Druckvorspannungen auf der Außen- und der Innenseite beschrieben.

Die Druckschrift DE 20 2012 012 875 U1 beschreibt Glaszusammensetzungen mit verbesserter chemischer und mechanischer Beständigkeit, um als Glasverpackungen für Arzneimittel und ähnliche Anwendungen eingesetzt werden zu können. Hiernach kann ein Glas verfestigt werden durch ein chemisches Vorspannen oder Härten, da eine Druckspannung an der Oberfläche aufgebracht wird. Die Spannung wird aufgebracht, indem der Artikel in ein Bad von geschmolzenem Salz eingetaucht wird.

Die Druckschrift DE 10 2016 113 826 A1 beschreibt ein Verfahren zum chemischen Vorspannen eines zylindrischen Glas-Halbzeugs zur Herstellung von Primärpackmitteln für pharmazeutische Zwecke durch Ionenaustausch, wobei eine Mehrzahl von Glas-Halbzeugen oder Glas-Behältern in einen Träger eingebracht wird. Der Träger wird sodann in ein Kaliumsalzbad während eines vorbestimmten Zeitraums eingetaucht, um einen Ionenaustausch in dem Kaliumsalzbad zu bewirken.

Die Druckschrift DE 10 2016 113 825 A1 schließlich beschreibt ein weiteres Verfahren zum chemischen Vorspannen eines zylindrischen Glas-Halbzeugs oder Glas-Behälters durch ein Ionenaustauschverfahren.

Eine derartige beidseitige Druckvorspannung kann erreicht werden durch einen Ionenaustausch an der oberflächennahen Schicht des Glases durch einen Prozess, welcher bei erhöhten Temperaturen in einem Salzbad abläuft. Bei bestimmten Gläsern führt dies dazu, dass kleinere Ionen, wie beispielsweise Natriumionen, aus der oberflächennahen Schicht des Glases gegen größere Ionen, wie beispielsweise Kaliumionen in dem Salzbad ausgetauscht werden. Dadurch entsteht eine Druckspannung im Bereich der Oberfläche, die zu einer Erhöhung der Festigkeit des Glases führen kann.

Hierbei erfährt jedoch auch die Innenoberfläche des Glascontainers, mithin also diejenige Fläche, welche später mit einem eingefüllten Präparat in Kontakt kommen soll, einen derartigen Ionenaustausch und damit auch eine chemische Veränderung. Für bestimmte Präparate kann dies nachteilig sein, so dass die Verwendungsmöglichkeiten derartiger Glascontainer eingeschränkt sind. Häufig werden hierdurch auch für medizinische Zwecke zugelassene Gläser zumindest an deren innerer Oberfläche derart stark verändert, dass in Folge deren Zulassung für diese medizinischen Anwendungen entweder erlischt oder eine erneute Zulassung nötig wird.

Des Weiteren sind auch Verfahren bekannt, bei denen nachgeschaltet dem chemischen Vorspannprozess eine Weiterbearbeitung, insbesondere eine Reinigung bzw. Entalkalisierung der Innenoberfläche erfolgt. Zwar kann durch diese Nachbehandlung die Abgabe von Alkalien in ein Pharmazeutikum reduziert werden, bei einer derartigen Reinigung/ Entalkalisierung kommt es jedoch zu einer weiteren chemischen Modifikation der Glasoberfläche, so dass auch hier eine erneute Zulassung des entsprechenden Glascontainers als pharmazeutisches Primärpackmittel unumgänglich ist. Darüber hinaus ist es auch nur, bis in einer geringen Tiefe möglich, die über das Salzbad eingebrachten Materialien wieder zu entfernen.

Aufgabe der Erfindung ist daher die Bereitstellung eines pharmazeutischen Behälters, welche im Vergleich zu unvorgespannten Standardbehältern über höhere Festigkeiten gegenüber radial oder axial von außen einwirkenden Kräften verfügt, welcher des Weiteren über eine im Vergleich zu unvorgespannten Standardbehältern höhere oder zumindest gleichwertige Innendruckfestigkeit aufweist und welcher keinen erneuten pharmazeutischen Zulassungsprozess erfordern soll.

Diese Aufgabe wird gelöst mit den Merkmalen der unabhängigen Ansprüche. Vorteilhafte Ausführungsformen und Weiterbildungen sind auch den abhängigen Ansprüchen sowie der Beschreibung zu entnehmen.

Die Erfindung offenbart einen Behälter aus Glas, insbesondere zur Aufnahme eines Präparates, umfassend einen Hohlkörper, der ein Innenvolumen, insbesondere zur Aufnahme des Präparates aufweist, wobei der Hohlkörper eine Wand mit einer Innenoberfläche, an welche das Innenvolumen des Hohlkörpers angrenzt, sowie eine der Innenoberfläche gegenüberliegende Außenoberfläche umfasst, wobei die Wand zumindest in einem Teilbereich eine Zone mit einer Druckspannung umfasst, wobei die Zone mit der Druckspannung in der Wand an die Außenoberfläche angrenzend ausgebildet ist, wodurch die Außenoberfläche zumindest in einem Teilbereich druckvorgespannt ist, und wobei die diesem Teilbereich gegenüberliegende Innenoberfläche der Wand frei von Druckspannungen ist und vorzugsweise unter Zugspannung steht.

Die Erfindung umfasst ferner ein Verfahren zum chemischen Vorspannen eines Behälters aus Glas, insbesondere zur Aufnahme eines Präparates, bei welchem ein Hohlkörper, der ein Innenvolumen insbesondere zur Aufnahme des Präparates definiert und eine Wand mit einer Innenoberfläche, welche zum Innenvolumen des Hohlkörpers weist, sowie eine der Innenoberfläche gegenüberliegende Außenoberfläche umfasst, mit dem Boden oder der Öffnung voran bis zu einer vorgesehenen Tiefe in ein Salzbad, umfassend Kaliumnitrat ($KNO_3$), getaucht wird, vorzugsweise bei erhöhter Temperatur von wenigstens 400 °C aber unterhalb von Tg des Glases, über eine Dauer von 1 bis 24 Stunden, vorzugsweise von 1 bis 8 Stunden, um an der Außenoberfläche zumindest abschnittsweise eine Druckspannung zu erzeugen, so dass die außenseitige Wand zumindest abschnittsweise druckvorgespannt wird.

Als Behälter gilt im Rahmen dieser Erfindung ein Gefäß oder ein Behältnis, welches geeignet ist, ein gasförmiges, festes oder flüssiges Material oder ein Gemisch aus gasförmigem, festem und/oder flüssigem Material aufzunehmen. Das Innenvolumen des Hohlkörpers des Behälters kann beispielsweise mit einem kosmetischen, medizinischen oder pharmazeutischen Präparat gefüllt werden, welches in vorzugsweise flüssiger, aber auch in fester Form oder in Mischungen hieraus vorliegen kann. Ein derartiger Behälter kann beispielsweise ein Fläschchen, eine Ampulle, eine Spritze oder eine Karpule umfassen.

Der Hohlkörper kann dazu eine Wand mit einer Innenoberfläche, welche zum Innenvolumen des Hohlkörpers weist, sowie eine der Innenoberfläche gegenüberliegend angeordneten Außenoberfläche umfassen, welche zur Umgebung weist. Der Hohlkörper kann von allgemein rotationssymmetrischer Form mit einem oberen und einem unteren Ende ausgebildet sein, wobei ein zylindrischer Körperbereich aus dem Ursprungsrohr bestehen kann, aus welchem der Behälter durch Heißformung hervorgegangen ist, und vorzugsweise eine Öffnung zum Befüllen oder Entleeren des Hohlkörpers umfassen. Diese Öffnung kann am oberen Ende angeordnet sein.

Die Wand des Hohlkörpers kann bei in einer bevorzugten Ausführungsform, etwa im Falle eines Fläschchens, eine Seitenwand und einen Boden sowie eine sich zwischen Boden und Seitenwand ausbildende abgerundete Kante, welche den Übergangsbereich zwischen Seitenwand und Boden darstellt, und welche nachfolgend auch als Ferse bezeichnet wird, umfassen. Der Boden bildet dabei das untere Ende des Hohlkörpers. Bei Fläschchen kann in Richtung des unteren Endes eine sich an die Seitenwand anschließende Schulter vorgesehen sein, welche in einen Hals übergehen und am oberen Ende einen Abschluss umfassen kann. Hals und Abschluss umfassen vorzugsweise einen Durchgang, der die Öffnung zum Innenvolumen des Hohlkörpers darstellt. Der obere Abschluss wird auch, gerade bei Primärverpackungen wie einer Karpule oder einem Fläschchen, als Rollrand bezeichnet und ist dem Boden gegenüberliegend angeordnet.

Sofern im Rahmen der Beschreibung der Erfindung die Begriffe "oben" oder "unten" in Bezug auf den Behälter verwendet werden, wird hiermit das obere und das untere Ende des Hohlkörpers bzw. des Behälters bezeichnet, wie dieses in den Zeichnungen zu erkennen ist. In diesem Zusammenhang beziehen sich die Begriffe "innen" auf Bereiche oder Flächen des Hohlkörpers bzw. Behälters, die als zu dem Innenvolumen des Hohlkörpers hinweisend betrachtet werden können und "außen" auf diejenigen Bereiche oder Flächen des Hohlkörpers bzw. Behälters, welche zur Umgebung hinweisen. Soweit der Begriff der "radialen Richtung" im Rahmen der vorliegenden Offenbarung verwendet wird, bezieht sich dieser auf zylindersymmetrische Behälter, für welche dieser eindeutig definiert ist. Sollte der Behälter eine nichtzylindersymmetrische Form oder Abweichungen von einer zylindersymmetrischen Form aufweisen, definiert dieser Begriff der "radialen Richtung" eine Richtung, welche senkrecht von der Außenoberfläche des Beälters zur Innenoberfläche des Behälters verläuft. Die Angabe "innerhalb eines Bereichs, welcher $0,5\ \mu m$ von der Außenoberfläche entfernt ist bis zu einem Bereich, welcher $0,5\ \mu m$ von der Innenoberfläche entfernt ist" bezieht sich auf einen Bereich einer in radialer Richtung von der Außenoberfläche zur Innenoberfläche verlaufenden Geraden. Soweit im Rahmen der vorliegenden Offenbarung auf die Mitte der Wand Bezug genommen wird, bezeichnet dieses die Mitte zwischen der Außenoberfläche und der Innenoberfläche auf der vorstehend erwähnten Geraden.

Ein derartiger Behälter aus Glas kann beispielsweise aus Abschnitten eines gezogenen Glasrohrs mittels nachfolgender Heißformung hergestellt werden. Dabei können für pharmazeutische Primärverpackungen geeignete Glaszusammensetzung ausgewählt sein, vorzugsweise Borosilikatglas oder Alumosilikatglas.

Erfindungsgemäß kann die Außenoberfläche der Wand eine außenseitig angeordnete Schicht oder Zone mit einer Druckspannung umfassen, so dass die Wand außen zumindest abschnittsweise druckvorgespannt ist. In anderen Worten, die Wand des Behälters kann zumindest abschnittsweise eine einseitige, außenseitige Druckvorspannung aufweisen. Dies bedeutet, dass die Wand an ihrer Außenoberfläche zumindest eine Schicht bzw. Zone umfasst, welche bis zu einer bestimmten Tiefe in die Wand hineinreicht und eine Druckspannung aufweist, welche von der Spannung der übrigen Wand, insbesondere der der Außenoberfläche gegenüberliegenden Innenoberfläche der Wand, abweicht.

Bevorzugt ist die Druckspannung auf der Außenoberfläche der Wand des Hohlkörpers damit höher als die Spannung auf der gegenüberliegenden Innenoberfläche der Wand. Besonders bevorzugt liegt auf der der außenseitigen Druckvorspannung gegenüberliegenden Innenoberfläche der Wand eine der Druckspannung entgegenwirkende Zugspannung vor. Demnach kann ein Behälter zur Verfügung gestellt werden, welcher einen Hohlkörper mit einer Wand umfasst, welche außenseitig, also einseitig, vorgespannt ist.

Diese Druckvorspannung, auch als Vorspannen bezeichnet, kann thermisch oder vorzugsweise chemisch erzeugt werden.

Ein thermisches Vorspannen des Behälters kann vorteilhaft ab einer Glasdicke von etwa 3 mm eingesetzt werden. Hierbei wird das Glas zunächst in einem Ofen gleichmäßig auf eine Temperatur oberhalb von 600 °C erhitzt und anschließend mit kalter Luft angeblasen, so dass es rasch abkühlt. Durch diesen definierten Prozess entsteht an den Oberflächen des Glases eine Druckspannungszone, die eine im Kern des Glases liegende Zugspannungszone umgibt. Durch dieses definierte Spannungsverhältnis weist ein thermisch vorgespanntes Glas eine um den Faktor 3-4 höhere mechanische und thermische Festigkeit auf als ein nicht vorgespanntes Glas. Da gerade im pharmazeutischen Bereich eingesetzte Behälter aus Glas im Allgemeinen über eine Wandstärke von weniger als 3 mm verfügen, ist dieses Verfahren zum erfindungsgemäßen Vorspannen weniger geeignet, insbesondere bei Behältern aus Glas mit einer Wanddicke von weniger als 3 mm.

Anders dagegen verhält es sich bei einem chemischen Vorspannen, bei dem nahezu keine derartigen Grenzen hinsichtlich der Wandstärke, somit der Dicke der Wand des chemisch vorzuspannenden Glases gesetzt sind. Eine chemische Druckspannung des Behälters kann durch Beaufschlagen des Behälters mit erhöhter Temperatur von etwa 400 °C oder darüber und Aussetzen in einem Salzbad umfassend Kaliumnitrat ($KNO_3$) erfolgen. Hierbei sollte jedoch die Temperatur unterhalb von Tg des Glases bleiben, um keine signifikante Relaxation zuzulassen, so dass Spannungen sich definiert ausbilden können, sollte aber hoch genug sein, so dass ein ausreichend schneller und tiefer Ionenaustausch in der Oberfläche stattfinden kann.

Das chemische Härten kann auch aufeinanderfolgend in verschiedenen derartigen Salzbädern erfolgen, wobei das Einbringen in das Salzbad über eine Dauer von etwa 1 bis 24 Stunden, bevorzugt über eine Dauer von 1 bis 8 Stunden erfolgt.

Bei diesem chemischen Vorspannverfahren können kleinere Natriumionen aus der oberflächennahen Schicht des Glases gegen größere Kaliumionen aus dem Salzbad ausgetauscht werden. Es werden die größeren Kaliumionen in das Netzwerk des Glases eingetragen und es bildet sich eine oberflächennahe Schicht bzw. Zone mit einer Druckspannung aus. Die entsprechend behandelte Oberfläche erfährt dabei eine Anreicherung mit Kaliumionen sowie eine Verarmung von Natriumionen und weist demzufolge einen höheren Gehalt an Kaliumionen auf als das ursprüngliche Glas. Hierbei kann die maximale Druckspannung CS an der Oberfläche liegen oder auch unterhalb der druckvorgespannten Oberfläche liegen.

Die Tiefe oder Dicke der vorgespannten Schicht auf der Außenoberfläche der Wand wird allgemein auch als DOL (DOL = "depth of layer") bezeichnet. Diese Dicke DOL kann mittels eines spannungsoptischen Nulldurchgangsmessverfahrens, beispielsweise mittels eines Messgerätes mit der Handelsbezeichnung FSM-6000 bestimmt werden.

Mittels dieses Messgeräts kann ebenfalls die Druckspannung der Oberfläche sowie die maximale Druckspannung CS einer Scheibe ermittelt werden. Die Dicke der vorgespannten Schicht DOL entspricht in der Regel ungefähr der Eindringtiefe der größeren Ionen aus dem Salzbad in die Glasoberfläche.

Sofern nachfolgend der Begriff "Alkalien" verwendet wird, so sind hierunter insbesondere die Elemente Kalium und Natrium bzw. deren Ionen in dem Glas zu verstehen, wobei bei deren nachfolgender Erwähnung jeweils die für Oxide umgerechneten Werte offenbart werden.

Im Inneren des Glases, also ausgehend von der Außenoberfläche in einer Richtung senkrecht zur Oberfläche, baut sich durch das Vorspannen eine der Druckspannung entgegen gerichtete Zugspannung auf, welche sich an die Druckspannungszone ab deren vorstehend erwähnter Tiefe DOL anschließt. Bei beidseitig vorgespanntem Glas kann dies besonders den mittleren Bereich der Wand betreffen, so dass ein mittiger Wandbereich mit Zugspannung beidseitig von jeweils einem Bereich mit erhöhter Druckspannung der jeweiligen Tiefe DOL umgeben ist, wie dieses beispielhaft in der WO 2013/130721 A1 beschrieben wird. Dabei bezeichnet CT in dieser Veröffentlichung den Wert der Zugspannung in dem mittigen Wandbereich, wo die Zugspannung bei beidseitigem Vorspannen auch am größten ist. Bei der erfindungsgemäßen einseitigen, außenseitigen Vorspannung setzt sich nunmehr die Zugspannung CT bis an die Innenoberfläche der Wand fort, wo diese im Rahmen der vorliegenden Offenbarung als IST bezeichnet wird und muss CT nicht den Maximalwert der Zugspannung angeben. Die Außenoberflächen der Wand weisen bei beidseitig vorgespanntem Glas also jeweils eine erhöhte Druckspannung auf, wohingegen im mittleren Bereich der Wand eine entgegengesetzt wirkende Zugspannung vorherrscht.

Im Sinne der Erfindung ist vorgesehen, lediglich die Außenoberfläche der Wand zumindest abschnittsweise vorzuspannen, die Innenoberfläche der Wand somit aber nicht.

In unerwarteter und überraschender Weise weist ein nur einseitig, außenseitig druckvorgespannter Behälter aus Glas eine signifikant bessere Festigkeit auf, insbesondere auch bei bestimmten von außen einwirkenden Kräften auf und auch bei Belastungen, welchen der Behälter etwa beim Befüllen und Transportieren ausgesetzt ist.

Hierunter zählen insbesondere eine bessere Festigkeit beim Befüllen und/oder Verschließen, welche gerade bei sprödharten Materialien wie Glas problematisch sein kann, aber auch eine gute Festigkeit bei axial oder radial einwirkenden Kräften ("side compression") oder Stößen, welche etwa beim automatischen Transport auftreten können.

Eine höhere Festigkeit des einseitig vorgespannten Behälters war insofern nicht zu erwarten, als dass davon ausgegangen werden musste, dass in Verbindung mit den Zugspannungen aufgrund der einseitigen, außenseitigen Druckvorspannung bei den vorstehend beschriebenen Belastungssituationen des Behälters zusätzliche Zugspannungen auf die Wand des Hohlkörpers einwirken, welche addierend wirken, so dass letztendlich kein Zuwachs, sondern eher ein Verlust an Festigkeit zu erwarten war.

Völlig unerwartet zeigt sich nun, dass bei außenseitig druckvorgespannten Behältern aus Glas der Berstdruck weitgehend unverändert erhalten bleibt wobei gleichzeitig die Festigkeit gegenüber von außen auf den Behälter einwirkenden Kräften, etwa bei axialer und radialer Kompression oder Stößen, sogar deutlich gesteigert werden kann.

Für das Verständnis dieses unerwarteten Materialverhaltens des einseitig außenseitig vorgespannten Behälters aus Glas wurde eine strukturmechanische Modellierung mit entsprechenden Simulationen durchgeführt, um die durch einseitige Vorspannung entstehenden Spannungsverhältnisse besser zu verstehen. Die Untersuchung zeigt, dass in diesem Falle, also bei einem außenseitig vorgespannten Behälter, die allgemein im mittleren Bereich des Glases existente Zugspannung CT sich bis zu der Innenoberfläche der Wand des Hohlkörpers fortsetzt, wo diese dann auch als innere Oberflächenspannung bezeichnet wird, beispielsweise als Inner Surface Tension oder abgekürzt als IST.

Die Abschätzung der Höhe dieser Zugspannung IST kann daher nicht mehr nach der allgemein bekannten Regel zur Abschätzung der Zugspannung CT bei beidseitig vorgespanntem Glas erfolgen, welche lautet:

$$CT = (CS \times DOL)/(t - 2\ DOL)$$

Hierbei gibt t die Wandstärke oder Dicke an und es wird angenommen, dass sich der Spannungsausgleich aus dem Verhältnis zwischen einer mittigen Zugspannungszone CT x (t-2DOL) und zwei angrenzenden äußeren Druckspannungszonen 2x ½ (CS x DOL)] jeweils aus deren Produkt der Erstreckungstiefe der jeweils erhöhten Spannung multipliziert mit der erhöhten Spannung herleiten lässt, so dass bei einem Ausgleich oder im Gleichgewicht der äußeren Druckspannung mit der inneren Zugspannung gilt:

$$CT \times (t-2DOL) = 2 \times ½\ (CS \times DOL)$$

Demgegenüber leitet sich die erfindungsgemäße Zugspannung an der Innenoberfläche IST, Inner Surface Tension, aus dem Spannungsausgleich zwischen einer einzigen Zugspannungszone und lediglich einer einzigen Druckspannungszone ab, so dass für den Gleichgewichtszustand bei einem Ausgleich der eingebrachten Spannungen näherungsweise gilt:

$$IST \times (t-DOL) = \tfrac{1}{2} (CS \times DOL)$$

Demnach gilt für die erfindungsgemäße Spannungsverteilung in der Wand des Hohlkörpers des Behälters:

$$IST = 0,5 \times (CS \times DOL)/(t-DOL),$$

wobei CS die im Bereich der Außenoberfläche eingebrachte maximale Druckspannung beschreibt, welche durch die jeweils in der Nähe angeordnete oder an die Außenoberfläche angrenzende Druckspannungszone erzeugt wurde,

DOL die Tiefe dieser Druckspannungszone ab der Außenoberfläche und
t die Dicke der Wand, in welche die Druckspannungszone eingebracht wurde, beschreibt.

Bei der erfindungsgemäßen einseitigen, außenseitigen Vorspannung setzt sich nunmehr die Zugspannung CT bis an die Innenoberfläche der Wand fort, wo diese im Rahmen der vorliegenden Offenbarung als IST bezeichnet wird.
Die Erfinder konnten nun, bei diesem Spannungsverlauf innerhalb der Wand des Behälters, einen sehr vorteilhaften Ausgleich zwischen der Erhöhung der Festigkeit des Behälters und einer Vermeidung von Verschlechterungen finden, wie beispielsweise von Verschlechterungen der Innendruckfestigkeit des Behälters, somit der Eigenschaften des Behälters gegenüber Berstdrücken finden.
Es kann beispielsweise eine zu hohe Zugspannung bei einseitiger Vorspannung bei Lastfällen, die mit einer sehr hohen Zugspannungsbelastung auf der Innenoberfläche einhergehen, zu einer Verschlechterung der Festigkeit des Behälters führen. Andererseits kann aber eine höhere Festigkeit in Bezug auf von außen wirkende Kräfte erreicht werden, etwa bei axialer oder radialer Krafteinwirkung oder auch bei Stößen von außen auf den Behälter aus Glas.
Auch wenn der Berstdruck, also die Größe der auf der Innenoberfläche maximal ertragbaren Zugspannungen, nicht gesteigert werden kann, so wirkt doch die Steigerung der Festigkeit gegenüber axialen und radialen Kräften auf die Gebrauchseigenschaften des Behälters.
Um die mittels der strukturmechanischen Modellierung erhaltenen Ergebnisse zu verifizieren, wurden Festigkeitsversuche an Behältern aus Glas durchgeführt. Hierzu wurden Behälter mit einheitlicher Geometrie, im Beispiel mit einem Nennvolumen von 2 ml (2R-Vials), sowohl aus Borosilikatglas als auch aus Alumosilikatglas entsprechenden Tests unterzogen, wobei Versuchslose von je 50 Behältern gebildet wurden.
Für die Durchführung der Tests wurden die Behälter mit einer Wandstärke t von 1 mm in deren rohrförmigem oder zylindrischen Bereich der Seitenwand einseitig außenseitig chemisch vorgespannt. Im Falle von Borosilikatglas wurde eine druckvorgespannte Oberflächenschicht mit einer Druckvorspannung von ca. CS = 200 MPa und einer Dicke der vorgespannten Schicht, also der Vorspanntiefe, von ca. DOL = 35 μm erzeugt. Im Falle von Alumosilikatglas wurde eine druckvorgespannte Oberflächenschicht mit einer Druckvorspannung von ca. CS = 800 MPa und einer Vorspanntiefe von ca. DOL = 55 μm erzeugt. Zum Vergleich wurden Proben identischen Materials und gleicher Geometrie herangezogen, welche nicht vorgespannt waren.
Die Festigkeit beim Befüllen wurde mit Hilfe des Berstversuchs bestimmt, um den sogenannten Berstdruck ("burst pressure"), zu ermitteln. Dieser Berstversuch ist ein zerstörender Test zur Bestimmung des Berstdruckes von Hohlkörpern. Er dient der Ermittlung der maximal ertragbaren Zugspannungen.
Die vorstehend genannten Proben wurden sowohl diesen Berstdruckversuchen sowie auch einer Beaufschlagung mit axialer und diametraler bzw. radialer Kompression und einem Pendelschlagtest zur Untersuchung des Verhaltens bei Stößen unterzogen.
Hierbei konnte nachgewiesen werden, dass die Berstdruck-Festigkeit im Falle eines einseitig außenseitig vorgespannten Behälters aus Borosilikatglas praktisch unverändert erhalten bleibt, wohingegen sie im Falle eines einseitig außenseitig vorgespannten Behälters aus Alumosilikatglas deutlich abnimmt.
Bei allen anderen drei Tests, also bei einer Beaufschlagung des Behälters mit axialer Kompression und diametraler bzw. radialer Kompression sowie bei Durchführung des Pendelschlagtests, konnten deutliche Verbesserung der Festigkeit festgestellt werden.
Im Falle von axialer und radialer oder diametraler Kompression zeigt ein Behälter umfassend Alumosilikatglas mit einseitiger außenseitiger Vorspannung eine Festigkeitssteigerung relativ zu einem gleichartigen nicht vorgespannten Behälters in der Größenordnung eines einseitig außenseitig vorgespannten Behälters aus Borosilikatglas.
Im Falle von Behältern aus Borosilikatglas reicht eine niedrigere Druckvorspannung an der Oberfläche dagegen aus, um eine signifikante Festigkeitssteigerung in Bezug auf die drei letztgenannten Belastungsfälle zu bewirken, ohne eine Verschlechterung der Berstdruck-Festigkeit zu erreichen. Demnach ist die Erfindung besonders geeignet für Behälter, welche Borosilikatglas umfassen bzw. aus diesen gefertigt sind.
Für die Festigkeit des Behälters, insbesondere bei Stößen von außen bzw. axial oder radial einwirkenden Kräften, ist demnach die Ausbildung der Zugspannung an der Innenoberfläche der Wand ein wesentliches Merkmal, dessen Größe die Festigkeit maßgeblich beeinflusst. Es ist im Sinne der Erfindung darauf zu achten, dass hinsichtlich der Zugspannung ein Optimum besteht, bei dessen Überschreitung die Oberfläche auf der Innenoberfläche der Wand geschwächt wird, bei dessen Unterschreitung aber keine ausreichend hohe Festigkeitsverbesserung der äußeren Oberfläche der Wand des Hohlkörpers erreicht wird.

Durch das einseitige, außenseitige Vorspannen des erfindungsgemäßen Behälters aus Glas ergibt sich zusammenfassend, dass die Innenoberfläche des Behälters, also die Oberfläche der Wand, welche zum Innenvolumen hinweist und damit in Kontakt mit einem eingefüllten Präparat kommen kann, keine druckvorgespannte Schicht umfasst. Vielmehr kann die der Druckspannung entgegen gerichtete Zugspannung, welche üblicherweise in der Mitte einer beidseitig vorgespannten Glasscheibe vorherrscht, über die Mitte der Wand des erfindungsgemäßen Behälters hinaus bis hin zu der Innenoberfläche der Wand reichen. Demnach liegt vorzugsweise an der Innenoberfläche der Wand eine (geringe) Zugspannung an.

In anderen Worten, es stellt sich ein asymmetrisches Profil des Verlaufes der Vorspannung in der Wand ein, wobei die äußere Hälfte der Wand im Mittel eine (positive) Druckspannung und die innere Hälfte der Wand im Mittel eine (negative) Zugspannung aufweist. Die innere Zugspannung ist dabei allerdings deutlich kleiner als die äußere Druckspannung.

In einer bevorzugten Ausführungsform kann aufgrund dieses Spannungsverlaufes in der Wand ein Behälter aus Glas zur Verfügung gestellt werden, welcher über einen Hohlkörper mit einer vergleichsweise hohen Druckvorspannung auf der Außenoberfläche und einer im Vergleich hierzu kleinen Zugspannung in dessen Mitte sowie an dessen Innenoberfläche verfügt, und wobei gilt:

$$IST < 0,8*(CS \times DOL)/(t - 2\ DOL)$$

und/oder

$$0,3*(CS \times DOL)/(t - DOL) < IST < 0,7*(CS \times DOL)/(t - DOL)$$

In einer weiterhin bevorzugten Ausführungsform kann ein Behälter aus Glas zur Verfügung gestellt werden mit einer Spannung an der Innenoberfläche der Wand IST, vorzugsweise gegenüberliegend dem Bereich mit Druckvorspannung auf der Außenoberfläche, von IST >= 0 MPa und IST <= 30 MPa, bevorzugt IST <= 20 MPa, besonders bevorzugt IST <= 15 MPa und ganz besonders bevorzugt IST <= 5 MPa. Auf diese Weise kann sichergestellt werden, dass die Zugspannung aufgrund der Vorspannung nicht zu groß wird, so dass sich das Berstverhalten des Behälters kaum oder vorzugsweise nicht verschlechtert, d.h. die Berstfestigkeit vorzugsweise erhalten bleibt.

Der Verlauf der Zugspannung kann dabei von der Mitte der Wand des erfindungsgemäßen Behälters bis hin zu der Innenoberfläche der Wand relativ konstant sein, d.h. die Höhe der Zugspannung ist in der Mitte der Wand in etwa gleich der Höhe der Zugspannung an der Innenoberfläche der Wand in dem besagten Bereich. In einer bevorzugten Ausführungsform unterliegt die Höhe der Zugspannung in der Mitte der Wand bis zur Innenoberfläche der Wand nur einer geringen Schwankung, welche vorzugsweise in einem Bereich von +/- 10 %, bevorzugt von +/- 5 % liegt.

Der erfindungsgemäße Behälter zeichnet sich daher auch dadurch aus, dass nur eine Seite der Wand, vorzugsweise nur die Außenoberfläche der Wand, eine oberflächennahe druckvorgespannte Zone mit einer Dicke umfasst, welche nicht mehr als 15 % in Bezug auf die Wandstärke, bevorzugt nicht mehr als 10 % und besonders bevorzugt nicht mehr als 8 % beträgt.

In einer ganz besonders bevorzugten Ausführungsform beträgt die Dicke der oberflächennahen druckvorgespannten Zone auf der Außenoberfläche der Wand nicht mehr als 6 % in Bezug auf die Dicke der Wand. Bei einer Wandstärke von beispielsweise t = 1,6 mm beträgt die Dicke der oberflächennahen druckvorgespannten Zone demnach etwa DOL = 96 $\mu$m. Hierdurch kann mit hoher Zuverlässigkeit erreicht werden, dass gerade bei einer chemischen Vorspannung derjenige Bereich, welcher infolge der Vorspannung in seiner Zusammensetzung verändert und mit Kaliumionen angereichert wird, nur die Außenoberfläche betrifft.

Der mittlere Bereich der Wand und ein innerer, von der Mitte der Wand zur Innenoberfläche der Wand hin reichender Bereich sind demnach vorzugsweise frei von zusätzlichen, durch das Vorspannen eingebrachten Alkalien, vorzugsweise Kaliumionen. Allgemein liegt eine Verteilung an durch das Vorspannen eingebrachten Alkalien vor, welche von der Außenoberfläche zu der Innenoberfläche der Wand hin innerhalb eines Bereichs, welcher 0,5 $\mu$m von der Außenoberfläche entfernt ist bis zu einem Bereich, welcher 0,5 $\mu$m von der Innenoberfläche entfernt ist, monoton fallend ist, wobei für diese Aussage über eine Tiefe von beispielsweise 100$\mu$m, oder auch nur 10$\mu$m integriert wurde, da beispielsweise ein Auslaugprozess wie mit ABF (Ammonium Bifluorid) die innerste sehr dünne Schicht wieder bezüglich der Alkalien auslaugen kann.

An der Innenoberfläche der Wand beträgt der Gehalt an $K_2O$ und $Na_2O$ gemittelt bis zu einer Tiefe von 500 $\mu m$ daher vorzugsweise nicht mehr als 10 Gew.-%, bevorzugt nicht mehr als 9 % und besonders bevorzugt nicht mehr als 8 %. Gemessen wird dieser Gehalt erfindungsgemäß an der Innenoberfläche der Wand in einer mittleren Höhe vom Boden aus gesehen.

Im Ergebnis liegt damit nach dem chemischen Vorspannen ein Konzentrationsverlauf von bei der chemischen Vorspannung ausgetauschten Alkalien vor, welcher ausgehend von einem hohen Wert in der Nähe der Außenoberfläche der Wand hin zu einem niedrigen, glasimmanenten Wert in der Nähe oder an der Innenoberfläche, von im Wesentlichen oder gleich Null abnimmt.

Demnach liegt ein großer Vorteil der Erfindung darin, dass die mit dem Medikament in Wechselwirkung stehende Innenoberfläche des Behälters chemisch unverändert erhalten bleibt. Dies ist insbesondere vorteilhaft für Behälter, welche für die Aufnahme eines kosmetischen, medizinischen oder pharmazeutischen Präparates vorgesehen sind. Gleichzeitig kann die Festigkeit des erfindungsgemäßen Behälters gesteigert werden, so dass die Produktzuverlässigkeit des Behälters, insbesondere beim Transportieren und/oder Befüllen, deutlich verbessert werden kann. Auch bei einem Verschließen des Behälters, etwa mit einem Verschluss wie einem Stopfen, können hohe Innendrücke entstehen, die zu einem Bersten führen können. Auch hier kann die Zuverlässigkeit des erfindungsgemäßen Behälters verbessert werden.

In besonderer Weise kommt dieser Vorteil bei Behältern aus Borosilikatglas zum Tragen, da bei diesem Glas keine chemische Vorbehandlung des Glases im erforderlich ist, um die geforderte chemische Beständigkeit zu erreichen. Wird allerdings hier, wie allgemein üblich, auch die Innenoberfläche der Wand des Hohlkörpers chemisch vorgespannt, werden dort in hoher Konzentration Alkalien, also Kaliumionen aus dem Salzbad, zum Austausch von Natriumionen des Glases eingebracht. Dies erfolgt typischerweise bis in eine Tiefe von einigen zehn $\mu m$ von der Innenoberfläche aus gesehen. Mittels einer chemischen Nachbehandlung ist es zwar möglich, in geringem Umfang diese Alkalien wieder zu entfernen. Dies erfordert aber zum einen einen zusätzlichen Bearbeitungsschritt, zum anderen gelingt dies auch nur in der äußersten Oberflächenschicht. Des Weiteren hängt die Alkaliabgabe der Innenoberfläche nach einer Nachbehandlung natürlich stark von der Intensität der Nachbehandlung mit den Parametern Zeitdauer, Temperatur, ph-Wert, etc. ab, kann aber ferner auch von Faktoren wie der Containergeometrie abhängen. Somit kann bei einer chemisch vorgespannten und nachbehandelten Innenoberfläche nicht von einer Glasoberfläche mit weitgehend konstanten chemischen Eigenschaften ausgegangen werden, wie es bei einer chemisch nicht vorgespannten Glasoberfläche der Fall ist.

Erfindungsgemäß kann in vorteilhafter Weise einerseits auf eine chemische Nachbehandlung der Innenoberfläche verzichtet werden, zum anderen ist die Innenoberfläche der Wand des Behälters auch bis größeren Tiefen, gemessen von der Innenoberfläche der Wand, ganz überwiegend frei von über das chemische Vorspannen eingebrachten Alkalien.

Auf diese Weise kann eine bezüglich der Festigkeit verbesserte pharmazeutische Primärverpackung aus Glas, vorzugsweise umfassend Alumosilikatglas oder Borosilikatglas, zur Verfügung gestellt werden, bei der die mit dem Präparat, beispielsweise dem Medikament, in Kontakt kommende Innenoberfläche der Wand des Behälters bis in einer Tiefe von 100 $\mu m$, bevorzugt bis zu 150 $\mu m$ und besonders bevorzugt bis zu 200 $\mu m$ gemessen von der Innenoberfläche senkrecht in die Tiefe der Wand keine durch chemische Vorspannung veränderten Alkali-Konzentrationen gegenüber dem Glas, beispielsweise dem Bulkglas in der Mitte der Wand des Behälters , aufweisen muss. Vorzugsweise liegt demnach in diesem Bereich in der Regel auch keine gegenüber dem Bulkglas erhöhte Konzentration an Kaliumionen vor.

Erfindungsgemäß kann ferner eine bezüglich der Festigkeit verbesserte pharmazeutische Primärverpackung aus Borosilikatglas zur Verfügung gestellt werden, bei der die mit dem Präparat, beispielsweise dem Medikament, in Kontakt kommende Innenoberfläche der Wand des Behälters chemisch unverändert ist gegenüber der Oberfläche eines nicht vorgespannten Behälters. Das Präparat, beispielsweise das Medikament, steht also weiterhin nur in Kontakt mit der ursprünglichen Borosilikatglas-Oberfläche.

Im Sinne der Erfindung ist vorgesehen, die Festigkeit des Behälters aus Glas mittels einseitigem außenseitigem Druckvorspannen vorzugsweise dort zu erhöhen, wo vornehmlich die kritischen Belastungen auftreten. Dies betrifft im allgemeinen Bereiche der Oberfläche auf der Außenoberfläche der Wand, vorzugsweise im Bereich der Seitenwand. Ferner erscheint es günstig, auch den Boden oder zumindest die Ferse, wo erfahrungsgemäß die größten Belastungen auftreten, einseitig außenseitig vorzuspannen. Hierbei kann im Bereich auch eine innenseitige Verdickung des Glases vorgenommen werden, um eine gegebenenfalls auftretende Erhöhung von Zugspannungen, welche durch Druckspannungszonen im Bereich der Ferse erzeugt werden, zu mildern oder sogar zu vermeiden.

In einer Weiterbildung der Erfindung ist vorgesehen, auch weitere Bereich der Außenwand des Behälters einseitig außenseitig vorzuspannen, etwa diejenigen Bereiche der Außenwand, die sich oberhalb der Seitenwand des Hohlkörpers anschließen. Im Fall von Fläschchen können diese Bereiche die Schulter und/oder den Hals und/oder den Rollrand des Hohlkörpers betreffen.

Vorteilhaft wird auch ein Behälter, welcher Glas umfasst oder aus Glas besteht, insbesondere zur Aufnahme eines Präparates, offenbart mit einem Hohlkörper, der ein Innenvolumen, insbesondere zur Aufnahme des Präparates aufweist, wobei der Hohlkörper eine Wand mit einer Innenoberfläche, an welche das Innenvolumen des Hohlkörpers angrenzt, sowie eine der Innenoberfläche gegenüberliegende Außenoberfläche umfasst, wobei die Wand zumindest in einem Teilbereich eine Zone mit einer Druckspannung umfasst, wobei die Zone mit der Druckspannung in der Wand an die Außenoberfläche angrenzend ausgebildet ist, und wobei in der Mitte der Wand, somit in der Mitte zwischen der Außenoberfläche und der Innenoberfläche für die Zugspannung CT gilt CT >= 0 MPa und CT <= 20 MPa, bevorzugt CT <= 15 MPa und besonders bevorzugt CT <= 5 MPa beträgt. Durch diese Ausgestaltung soll sicher vermieden werden, dass es zu einem Berstverhalten wie in der WO 2013/130721 A1 beschrieben kommt.

Vorteilhaft bildet die Wand des Hohlkörpers wenigstens eine Öffnung und/oder einen Rollrand und/oder einen Hals und/oder eine Schulter eine und/oder Seitenwand und/oder eine Ferse und/oder einen Boden aus.

Wenn eine oder die Druckspannung umfassende Zone jeweils benachbart zur Schulter, zum Hals, zum Rollrand, zur Seitenwand, zur Ferse und/oder zum Boden und/oder angrenzend an die Schulter, den Hals, den Rollrand, die Seitenwand, die Ferse und/oder den Boden ausgebildet ist, können hierdurch die Festigkeitseigenschaften des Behälters vorteilhaft an die jeweiligen Anforderungen bezüglich dessen mechanischer Beanspruchung angepasst werden.

Wenn durch die Zone mit der Druckspannung, welche in der Wand an die Außenoberfläche angrenzend ausgebildet ist, Druckspannungen im Bereich der Außenoberfläche ausgebildet sind, insbesondere bis zu einer Tiefe DOL ausgebildet sind, und in radialer Richtung ein bezüglich der Mitte der Wand asymmetrisches Profil des Verlaufes der Spannung von der Außenoberfläche zu der gegenüberliegenden Innenoberfläche in der Wand vorliegt, können gegenüber symmetrischer Vorspannung wesentliche Vorteile erzielt werden, wie beispielsweise eine erhebliche Festigkeitssteigerung ohne jedoch hierbei wesentliche Nachteile bezüglich der Berstdruckbeständigkeit hinnehmen zu müssen.

Vorteilhaft kann dabei gelten, dass in dem Bereich mit Druckspannungen in der Außenoberfläche die Spannung IST, Inner Surface Tension, an der diesem Bereich gegenüberliegenden Innenoberfläche der Wand als Zugspannung ausgebildet ist und für diese Zugspannung IST gilt, IST >= 0 MPa und IST <= 30 MPa, bevorzugt IST <= 20 MPa, besonders bevorzugt IST <= 15 MPa und ganz besonders bevorzugt IST <= 5 MPa beträgt.

Bei einer besonders bevorzugten Ausführungsform gilt in dem Bereich mit Druckspannungen in der Außenoberfläche für die Spannung, insbesondere Zugspannung an der gegenüberliegenden Innenoberfläche der Wand:

$$0,3*(CS \times DOL)/(t - DOL)<IST< 0,7*(CS \times DOL)/(t - DOL),$$

wobei DOL die Tiefe der Zone, in welcher Druckspannungen existieren, bezeichnet,

t die Dicke der Wand und
CS die Spannungen, insbesondere Druckspannungen an der Außenoberfläche bezeichnet.

Die Erfinder haben herausgefunden, dass in dem Bereich mit Druckspannungen in der Außenoberfläche die Höhe der Zugspannung in der Mitte der Wand in etwa gleich der Höhe der Zugspannung an der gegenüberliegenden Innenoberfläche der Wand ist, und wobei vorzugsweise die Höhe der Zugspannung in der Mitte der Wand bis zur Innenoberfläche der Wand nur einer geringen Schwankung in einem Bereich von +/- 10 %, bevorzugt von +/- 5 %, unterliegt. Hierdurch wird eine über einen großen Bereich der Wand des Behälters gleichmässige Spannung, insbesondere Zugspannung bereitgestellt, welche Spannungsspitzen und eine damit einhergehende Verminderung der Berstdruckbeständigkeit vermeidet.

Vorteilhaft beträgt bei dem Bereich mit einer Druckspannung in der Außenoberfläche die oberflächennahe druckvorgespannte Zone, welche eine Dicke oder Tiefe DOL umfasst, welche nicht mehr als 15 % in Bezug auf die Dicke der Wand oder Wandstärke in diesem Bereich, bevorzugt nicht mehr als 10 % und besonders bevorzugt nicht mehr als 8 % und ganz besonders bevorzugt nicht mehr als 6 % beträgt.

Bevorzugt ist bei einer chemischen eingebrachten Vorspannung in der Zone mit Druckspannung die Verteilung an in das Glas bei der chemischen Vorspannung eingebrachten Alkalien, von der Außenoberfläche zu der gegenüberliegenden Innenoberfläche der Wand hin zumindest innerhalb eines Bereichs, welcher 0,5 $\mu$m von der Außenoberfläche entfernt ist bis zu einem Bereich, welcher 0,5 $\mu$m von der Innenoberfläche entfernt ist, direkt nach dem chemischen Vorspannen monoton fallend.

Hierbei kann zumindest in dem Bereich mit einer Druckspannung in der Außenoberfläche das Glas an der gegenüberliegenden Innenoberfläche der Wand bis in einer Tiefe von 100 $\mu$m, bevorzugt bis zu 150 $\mu$m und besonders bevorzugt bis zu 200 $\mu$m, keine zusätzlich in das Glas eingebrachte Konzentration einer Alkali-Spezies gegenüber dem Glas in der Mitte der Wand aufweisen, sodass eine chemische Vorspannung die Verwendung des Behälters für medizinische Anwendungen nicht beeinträchtigt.

Bei einer bevorzugten Ausführungsform beträgt zumindest an der dem Bereich mit einer Druckspannung gegenüberliegenden Innenoberfläche der Wand der Gehalt an $K_2O$ und $Na_2O$ im Mittel bis zu einer Tiefe von 500 $\mu$m nicht mehr als 13 Gew.-%, bevorzugt nicht mehr als 9 % und besonders bevorzugt nicht mehr als 8 %.

Je nach vorgesehenem Umfang des Vorspannens sind verschiedene Ausführungsformen für das Verfahren geeignet. Sollen etwa nur der Boden und/oder die Ferse und/oder die Seitenwand chemisch einseitig außenseitig vorgespannt werden, so bietet es sich an, den Behälter mit dem Boden voran in das Salzbad einzutauchen. Sollen ferner auch die sich oberhalb anschließenden Bereiche des Behälters chemisch einseitig außenseitig vorgespannt werden, so kann der Behälter mit dem Boden voran tiefer in das Salzbad eingetaucht werden, wobei aber darauf zu achten ist, dass kein Salzbad in die Öffnung eindringt, um die Innenoberfläche des Behälters nicht chemisch zu verändern. Hierzu ist es beispielsweise möglich, die Öffnung mit einem Stopfen zu verschließen, wodurch es dann möglich ist, den Behälter auch vollständig unterzutauchen.

Eine andere Ausführungsform sieht vor, den Behälter kopfüber in einer Bewegungsrichtung parallel zur Längsachse des Behälters und senkrecht zur Oberfläche des Salzbades einzutauchen, so dass durch die sich in dem Hohlkörper befindliche Luft das Eindringen von Salzlösung in den Hohlkörper verhindert werden kann. Nachteilig bei diesem Verfahren ist, dass Dämpfe aus dem Salzbad in die Öffnung gelangen können, falls diese Öffnung nicht vorher sachgerecht verschlossen wurde.

Die Erfindung wird nachfolgend unter Bezugnahme auf die beigeschlossenen Zeichnungen anhand bevorzugter Ausführungsformen beschrieben.

Die Zeichnungen zeigen:

Fig. 1     einen erfindungsgemäßen Behälter aus Glas am Beispiel eines Fläschchens für die Aufnahme eines Präparates in einer zumindest teilweisen Querschnittdarstellung, die sich im Wesentlichen vertikal durch die Mitte des Behälters erstreckt,

Fig. 2     rein schematisch einen Ausschnitt der Wand eines Bereichs der Seitenwand, aus einer Querschnittdarstellung, die sich im Wesentlichen vertikal durch die Mitte des Behälters erstreckt,

Fig. 3-6   Ergebnisse von Festigkeitsversuchen an Behältern aus Glas, wobei jeweils einseitig außenseitig vorgespannte Behälter aus Borosilikatglas und aus Alumosilikatglas mit jeweils nicht vorgespannten Behältern verglichen und analysiert werden,

Fig. 7     exemplarisch die durch einseitige Vorspannung entstehenden Spannungsverhältnisse über die Dicke der Wand, und

Fig. 8     den Verlauf (positiver) Druckspannung und (negativer) Zugspannung in der Wand anhand eines Spannungsverlaufes von der Außenoberfläche zur Innenoberfläche der Wand

Fig. 9     einen erfindungsgemäßen Behälter aus Glas am Beispiel eines Fläschchens, wobei ein Stopfen mit einem Edelstahlkörper in die Öffnung des Behälters zu dessem fluiddichten Verschließen eingebracht ist, in einer zumindest teilweisen Querschnittdarstellung, die sich im Wesentlichen vertikal durch die Mitte des Behälters erstreckt.

Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen.

Zum besseren Verständnis werden nachfolgend die folgenden Definitionen vorgenommen.

Als Zone wird im Rahmen der vorliegenden Offenbarung ein räumliches Volumen verstanden, welches sich ganz innerhalb des Glases befindet, aber an dessen Oberflächen angrenzen kann. Als Oberfläche wird im Rahmen der vorliegenden Erfindung nicht der mathematische Begriff eine Oberfläche verstanden sondern der physikalische, bei welchem dieser mindestens eine bis mehrere atomare oder molekulare Lagen des Glases so umfasst, dass deren physikalische Eigenschaften, wie beispielsweise Druck- oder Zugspannungen messbar, beispielsweise in der Innenoberfläche und der Außenoberfläche sind.

Der Begriff einer Schicht kann die vorstehend erwähnte Zone umfassen und mit dieser begrifflich dann übereinstimmen, wenn sich diese Zone beispielsweise oberflächennahe entlang einer Oberfläche, beispielsweise der Außenoberfläche erstreckt und hierdurch ein räumliches Volumen einnimmt. In diesem Falle werden die Begriffe der Zone und der Schicht synonym gebraucht, obwohl diese Art der Schicht in der Regel aus arteigenem Material des Glases besteht, welches jedoch thermisch oder chemisch behandelt sein kann.

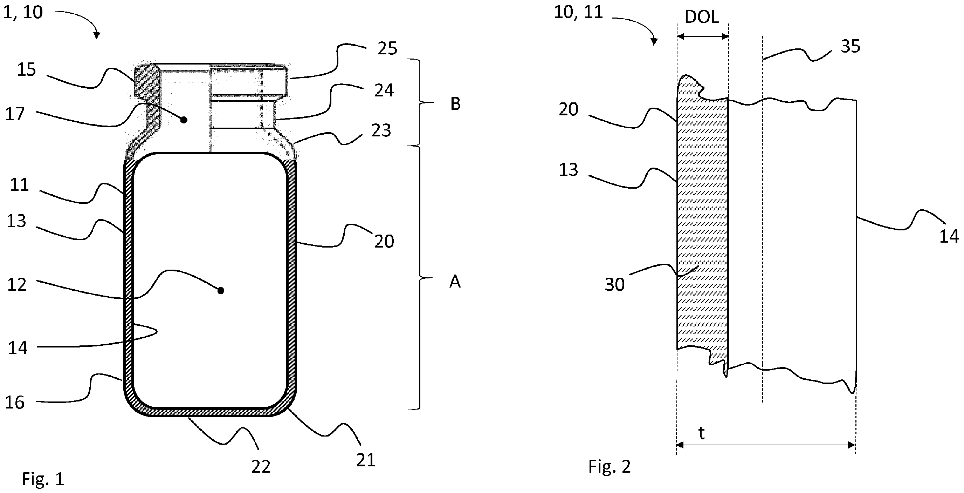

Fig. 1 zeigt einen erfindungsgemäßen Behälter 1 aus Glas am Beispiel eines Fläschchens 10 für die Aufnahme eines Präparates (nicht dargestellt). Der Behälter 1 umfasst einen Hohlkörper, der ein Innenvolumen 12 zur Aufnahme des Präparates definiert. Der Behälter 1 kann ohne Beschränkung auf das abgebildete Ausführungsbeispiel selbstverständlich auch andere geometrische Formen aufweisen, umfassend eine Ampulle, eine Spritze oder eine Karpule.

Der Hohlkörper umfasst eine Wand 11 mit einer Innenoberfläche 14, welche zum Innenvolumen 12 des Hohlkörpers weist, sowie eine der Innenoberfläche 14 gegenüberliegend angeordnete Außenoberfläche 13, welche zur Umgebung weist. Der rotationssymmetrische Hohlkörper weist einen zylindrischen oder rohrförmigen Abschnitt mit einem oberen Ende 15 und einem unteren Ende 16 ausgebildet und umfasst an seinem oberen Ende 15 eine Öffnung 17 zum Befüllen oder Entleeren des Hohlkörpers.

Die Wand 11 des Hohlkörpers umfasst im Beispiel des abgebildete Fläschchens 10 eine Seitenwand 20 und einen Boden 22 sowie im Übergangsbereich zwischen Boden 22 und Seitenwand 20 eine abgerundete Kante, welche als Ferse 21 bezeichnet wird. Der Boden bildet demnach das untere Ende des Hohlkörpers. Im Fall des Fläschchens 10 bildet eine Schulter 23 den oberen Abschluss der Seitenwand 20. Diese geht in einen Hals 24 über, woran sich schließlich am oberen Ende 15 ein Abschluss anschließt, der im Beispiel des Fläschchens 10 auch als Rollrand 25 bezeichnet wird. Es ist dem Fachmann ersichtlich, dass sich diese Bezeichnungen der Wand 11 auf das abgebildete Fläschchen 10 beziehen und im Falle anderer Formen des Behälters, etwa bei einer Ausbildung als Ampulle, als Spritze oder Karpule, andere Bezeichnungen existieren. Die erfindungsgemäße einseitige außenseitige Vorspannung bezieht sich demnach selbstverständlich nicht nur auf Fläschchen, sondern allgemein auf Behälter aus Glas unterschiedlicher Geometrien.

Unabhängig von der konkreten geometrischen Ausgestaltung des Behälters 1 lässt sich ein unterer Abschnitt A des Behälters definieren, welcher einen Bereich ausgehend vom unteren Ende 16 des Behälters umfasst und im wesentlichen den das Innenvolumen ausbildenden Bereich des Hohlkörpers, sowie ein sich anschließender Abschnitt B, welcher den oberen Bereich des Behälters betrifft.

Das abgebildete Fläschchen 10 ist aus einem Teilstück eines gezogenen Glasrohrs mittels nachfolgender Heißformung hergestellt. Im Beispiel ist das Fläschchen 10 aus Borosilikatglas gefertigt, wobei aber auch andere, etwa für pharmazeutische Primärverpackungen geeignete Glaszusammensetzungen, ausgewählt sein können, beispielsweise Alumosilikatglas.

Borosilikatglas weist einen hohen hydrolytischen Widerstand gegenüber chemischen Auslaugungen auf und es werden für pharmazeutische Anwendungen, beispielsweise gemäß der Europäischen Pharmacopoeia 8.4 aus Borosilicatglas bestehende Behälter vorteilhaft als dem Typ I entsprechend eingestuft, somit als der höchsten Widerstandsklasse entsprechend eingestuft.

Erfindungsgemäß umfasst die Außenoberfläche 13 der Wand 11 eine außenseitig angeordnete Schicht oder Zone, welche eine Druckspannung aufweist, so dass die Wand 11 außen zumindest abschnittsweise druckvorgespannt ist. Diese Zone mit Druckspannung weist bis zu einer bestimmten Tiefe DOL in die Wand 11 hinein, welche selbst die Dicke t aufweist.

Fig. 2 zeigt rein schematisch einen Ausschnitt der Wand 11, im Beispiel einen Bereich der Seitenwand 20, mit einer Außenoberfläche 13 und einer Innenoberfläche 14. Von der Außenoberfläche 13 der Wand 11 beginnend schließt sich in Richtung Mitte 35 der Wand 11 die Zone 30 mit der Druckvorspannung an. Es ist deutlich ersichtlich, dass diese Zone 30 nicht bis zu Mitte 35 der Wand 11 hineinreicht und insbesondere derjenige Bereich der Wand 11, der sich zwischen der Mitte 35 der Wand und der Innenoberfläche 14 befindet. Hieraus ergibt sich, dass auf der gegenüberliegenden Innenoberfläche 14 der Wand keine Druckspannung, sondern eher eine Zugspannung vorliegt. Damit liegt ein erfindungsgemäß einseitig, außenseitig vorgespannter Behälter vor.

Vorzugsweise werden somit nur diejenigen Bereiche des Behälters 1 mit einer einseitigen außenseitigen Druckvorspannung versehen, welche vornehmlich den kritischen Belastungen ausgesetzt sind.

Dies betrifft, wie im Beispiel der Fig. 2 dargestellt, in vielen Fällen die Seitenwand 20, da hier, gerade beim Transport, Stöße und radiale Belastungen auftreten können. Beim Befüllen können stärkere Druckkräfte, welche im Inneren des Behälters 1 wirken, hinzukommen, zudem axiale Belastungen etwa beim Verschließen. Von daher bietet es sich an, auch die Wand 11 im Bereich der Ferse 21 und dem Boden 22, also den mit A gekennzeichneten Abschnitt des Behälters 1, mit einer erfindungsgemäßen einseitigen außenseitigen Druckvorspannung zu versehen.

In vielen Fällen ist es günstig, den gesamten Außenbereich des Behälters, also auch die zu dem Abschnitt B gehörenden Bereiche, umfassend die Schulter 23, den Hals 24 und den Rollrand 25, mit einer erfindungsgemäßen einseitigen außenseitigen Druckvorspannung zu versehen.

Die Wandstärke t des Behälters 1 aus Fig. 2 liegt ohne Beschränkung auf das Ausführungsbeispiel bei etwa t = 1 mm, kann aber auch beispielsweise bei t = 1,6 mm liegen. Von daher ist ein thermisches Vorspannen nur schwer möglich, so dass dieses Fläschchen 10 chemisch vorgespannt ist. Hierzu wird der Behälter 1 bei erhöhter Temperatur von etwa 400 °C oder mehr einem Salzbad umfassend Kaliumnitrat ($KNO_3$) über eine Dauer von 1 bis 24 Stunden, oder auch 1-8 Stunden ausgesetzt. Hierbei sollte diese Temperatur jedoch jeweils unterhalb der Glastemperatur Tg des Glases bleiben und kann aber beispielsweise für bestimmte Gläser auch 450° C oder auch 490° C betragen.

Das chemische Vorspannen führt zu einer Anreicherung von Kaliumionen aus dem Salzbad anstelle und an der Stelle von kleineren, im Glas vorhandenen Natriumionen in der oberflächennahen Schicht des Glases. Diese oberflächennahe Schicht stellt die Zone 30 dar. Diese Schicht und damit die Außenoberfläche 13 des Behälters 1 weist nach dem chemischen Vorspannen eine höhere Festigkeit auf als eine unbehandelte Oberfläche.

Im Inneren der Wand 11, also ausgehend von der Außenoberfläche 13 in Richtung der Innenoberfläche 14, baut sich durch das außenseitige Vorspannen eine der Druckspannung entgegen gerichtete Zugspannung auf.

Die Dicke der vorgespannten Schicht auf der Außenoberfläche 13 der Wand 11, also die DOL, ist in der Fig. 2 angegeben, wobei die konkrete Dicke allein aus Gründen der besseren Veranschaulichung ausgewählt wurde. Tatsächlich beträgt die DOL im allgemeinen einige zehn Mikrometer, im Beispiel etwa 35 $\mu$m, wobei allgemein ein Bereich von 10 $\mu$m bis 100 $\mu$m als geeignet angesehen wird.

Der einseitig außenseitig vorgespannte Behälter 1 weist eine bessere Festigkeit beim Befüllen und/oder Verschließen auf, zudem auch eine gute Festigkeit bei axial oder radial einwirkenden Kräften oder Stößen, wie sie etwa beim automatischen Transport auftreten können.

Anhand einer strukturmechanischen Modellierung mit entsprechenden Simulationen konnte gezeigt werden, dass durch die einseitige Vorspannung die allgemein im mittleren Bereich des Glases existente Zugspannung sich bis zu der Innenoberfläche der Wand des Hohlkörpers fortsetzt. Für die erfindungsgemäße Spannungsverteilung in der Wand 11 des Hohlkörpers des Behälters 1 gilt:

$$IST = 0,5 \ x \ (CS \ x \ DOL)/(t-DOL)$$

wobei t die Dicke der Wand bezeichnet.

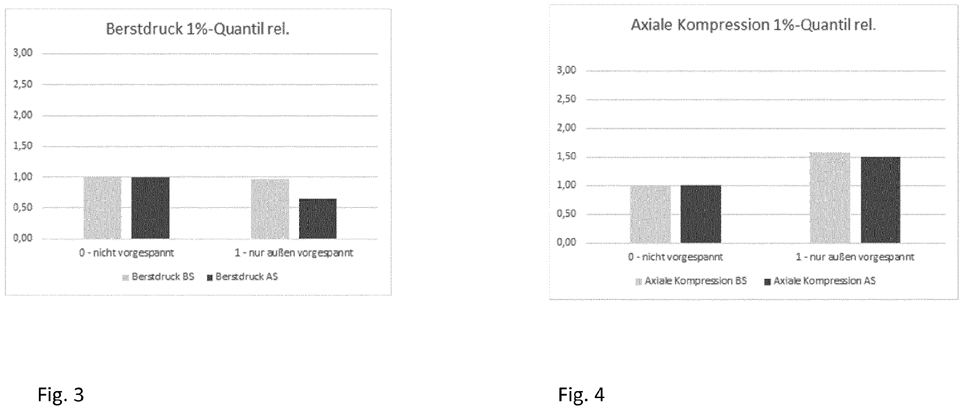

Die Figuren 3 bis 7 zeigen Ergebnisse von Festigkeitsversuchen an Behältern 1 aus Glas, wobei jeweils erfindungsgemäß einseitig außenseitig vorgespannte Behälter 1 mit einem Nennvolumen von 2 ml (2R-Vial) sowohl aus Borosilikatglas als auch aus Alumosilikatglas verschiedenen Tests unterzogen wurden, und wobei Versuchslose von je 50 Behältern gebildet wurden. Im Falle von Borosilikatglas wurde eine druckvorgespannte Oberflächenschicht mit einer maximalen Druckvorspannung von ca. CS = 200 MPa mit einer DOL = 35 $\mu$m erzeugt. Im Falle von Alumosilikatglas wurde eine druckvorgespannte Oberflächenschicht mit einer maximalen Druckvorspannung von ca. CS = 800 MPa und einer DOL = 55 $\mu$m erzeugt. Zum Vergleich wurden Proben identischen Materials und gleicher Geometrie herangezogen.

Hierbei versteht der Fachmann insbesondere als Borosilikatgläser Gläser, die folgende Komponenten enthalten (in Gew.-%):

| | |
|---|---|
| $SiO_2$ | 65 - 85 |
| $B_2O_3$ | 5 - 15 |
| $Na_2O + K_2O$ | 3,5 - 9 |
| $Al_2O_3$ | 0 - 7 |
| CaO | 0 - 3. |

Aluminosilicatgläser können bevorzugt die nachfolgende Zusammensetzung in Gew.-% aufweisen:

| | |
|---|---|
| $SiO_2$ | 55 bis 75 |
| $Na_2O$ | mehr als 7 bis 17 |
| $Al_2O_3$ | 8 bis 20 |
| $K_2O$ | 0 bis 4 |
| MgO | 0 bis 5 |
| $ZrO_2$ | 0 bis 5 |
| ZnO | 0 bis 4 |
| CaO | 0 bis 10 |
| $Na_2O + K_2O + MgO + ZnO + CaO$ | 13 bis 28 |
| $SnO_2$ | 0 bis 1 |
| $TiO_2 + CeO_2$ | weniger oder gleich 1. |

| | Glas | Berstdruck | Axiale Kompression | Diametrale Kompression | Pendelschlag |
|---|---|---|---|---|---|
| nur außen vorgespannt | BS | 0,96 | 1,58 | 2,13 | 2,56 |
| nur außen vorgespannt | AS | 0,64 | 1,51 | 2,52 | 6,40 |

Vorstehend ist die relative Verbesserung des 1%-Quantils durch außenseitige Vorspannung bezogen auf das 1% Quantil des jeweils nicht vorgespannten Behälters angegeben. Hierbei bezeichnet die Angabe BS Borosilikatglas und die Angabe AS Alumosilikatglas. Somit sind die vorstehenden Angaben ein relatives Maß für die verbesserten Eigenschaften eines erfindungsgemäßen Behälters gegenüber einem nicht mit einer Vorspannung versehenen herkömmlichen Behälter.

Die Bestimmung des Berstdrucks erfolgt in einem Testverfahren nach DIN EN ISO 7458 ("Glass containers - internal pressure resistance, Test methods"). Hierbei wird der Behälter mit einem hydraulischen Druck im Innern des Behälters beaufschlagt. Dieser Druck wird kontinuierlich mit einer Rate von 5,8 bar pro Sekunde erhöht, bis es zum Bruch des Behälters kommt.

Die mechanische Beständigkeit des Behälters gegen axiale Kompression wird bestimmt in einem Testverfahren nach DIN EN ISO 8113 ("Glass containers - Resistance to vertical load - Test methods"). Hierbei wird in axialer Richtung eine Druckkraft auf den Behälter beaufschlagt, welche mit einer konstanten Rate von 500 N pro Minute bis zum Bruch des Behälters erhöht wird.

Die mechanische Beständigkeit gegen radiale bzw. diametrale Kompression wird ebenfalls in einem Testverfahren nach DIN EN ISO 8113 ermittelt.

Der Pendelschlagtest ist beschrieben in DIN 52295.

Die Festigkeit beim Befüllen und/oder Verschließen und/oder der Lyophilisation wurde mit Hilfe des Berstversuchs bestimmt, um den sogenannten Berstdruck ("burst pressure"), zu ermitteln. Bei diesen Berstversuchen wurde der Innendruck so stark erhöht, bis ein Bersten des jeweiligen Behälters auftrat. Fig. 3 zeigt Ergebnisse dieses Berstdrucks. Dargestellt ist jeweils das 1-%-Quantil, wobei das 1-%-Quantil eines nicht vorgespannten Behälters aus Borosilikatglas in dem jeweiligen Versuch auf 1 normiert wurde. Es zeigt sich, dass im Fall von Behältern aus Borosilikatglas die Berstdruck-Festigkeit im Falle eines einseitig außenseitig vorgespannten Behälters aus Borosilikatglas praktisch unverändert erhalten bleibt, wohingegen sie im Falle eines einseitig außenseitig vorgespannten Behälters aus Alumosilikatglas abnimmt.

Das Ergebnis der Untersuchung bei einem axialen Lastfall, wie er etwa beim Befüllen des Behälters auftreten können, ist in Fig. 4 abgebildet. Auch hier sind jeweils die 1%-Quantile angegeben. Hier zeigt sich, dass die erfindungsgemäße einseitige außenseitige Vorspannung des Behälters aus Borosilikatglas zu einer deutlichen Festigkeitssteigerung des Behälters führt. Im Vergleich zu einem Behälter aus Alumosilikatglas, welcher ebenfalls eine Festigkeitssteigerung erfährt, ist der Zuwachs an Festigkeit bei einem Behälter aus Borosilikatglas aber höher.

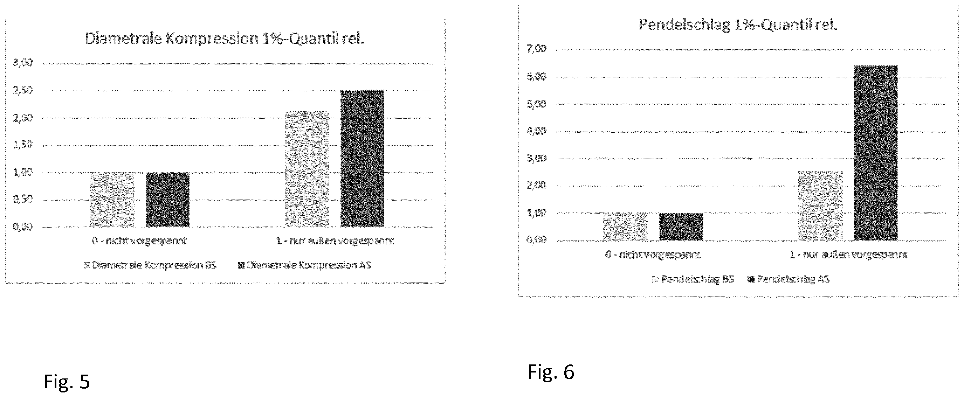

Das Ergebnis der Untersuchung bei einem diametralen Lastfall, also bei einer radial auf die Außenoberfläche des Behälters einwirkenden Kraft, wie sie etwa beim Transport auftreten kann, ist in Fig. 5 abgebildet. Auch hier sind die jeweiligen 1%-Quantile angegeben. Hier zeigt sich, dass die erfindungsgemäße einseitige außenseitige Vorspannung des Behälters aus Borosilikatglas zu einer ebenfalls sehr deutlichen Festigkeitssteigerung des Behälters führt.

Das Ergebnis des Pendelschlagversuches, also bei einer Belastung, wie sie infolge von Stößen auf den Behälter einwirken kann, ist in Fig. 6, angegeben jeweils in Form der 1%-Quantile, abgebildet. Auch hier zeigt sich, dass die erfindungsgemäße einseitige außenseitige Vorspannung des Behälters aus Borosilikatglas zu einer ebenfalls sehr deutlichen Festigkeitssteigerung des Behälters führt. Ein Behälter aus Alumosilikatglas kann hierbei eine sogar noch stärkere Festigkeitssteigerung erfahren, als es bei einem Behälter aus Borosilikatglas der Fall ist.

Mit den drei letztgenannten Untersuchungen, also bei einer Beaufschlagung des Behälters mit axialer Kompression und diametraler bzw. radialer Kompression sowie bei Durchführung des Pendelschlagtests, konnte gezeigt werden, dass zu einer deutlichen Verbesserung der Festigkeit des Behälters kommt.

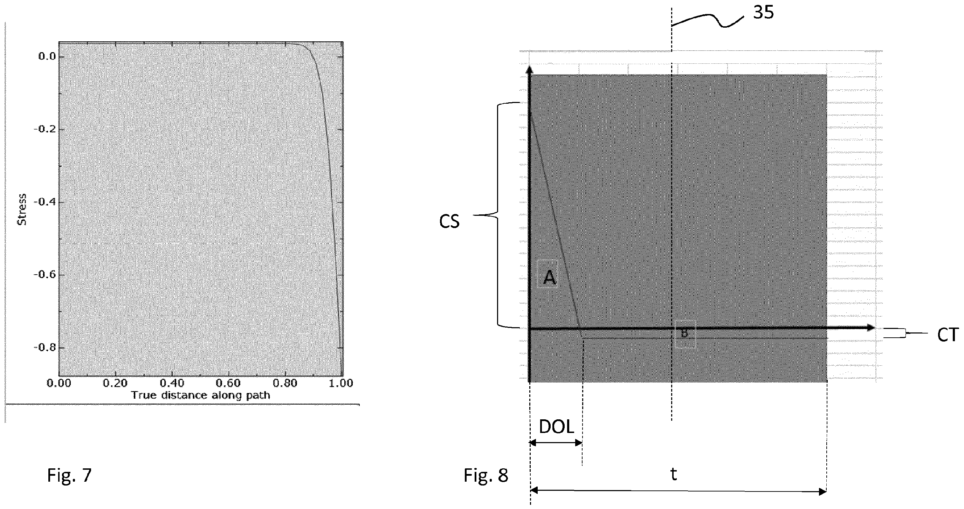

Fig. 7 zeigt exemplarisch die durch einseitige Vorspannung entstehenden Spannungsverhältnisse über die Dicke der Wand. Es zeigt sich, dass die Zugspannung CT, welche typischerweise im Zentrum, also im Bereich der Mitte 35 der Wand, auftritt, sich bis zur Innenoberfläche der Wand des Behälters fortsetzt.

Für die Festigkeit des Behälters insgesamt, insbesondere bei Stößen von außen bzw. axial oder radial von außen einwirkenden Kräften, ist die Ausbildung der Zugspannung an der Innenoberfläche der Wand ein wesentliches Merkmal, dessen Größe die Festigkeit maßgeblich beeinflusst. Es ist im Sinne der Erfindung vorteilhaft, wenn die Zugspannung auf der Innenoberfläche der Wand nicht zu hoch wird, um zu verhindern, dass die Berstdruck-Festigkeit sich verschlechtert.

Im Ergebnis stellt sich in der Wand ein bezogen auf die Mitte der Wand asymmetrisches Profil des Verlaufes der Spannung ein, wobei die äußere Hälfte der Wand im Mittel eine (positive) Druckspannung und die innere Hälfte der Wand eine (negative) Zugspannung aufweist.

Den Verlauf (positiver) Druckspannung und (negativer) Zugspannung in der Wand zeigt Fig. 8 schematisch in einem Beispiel. Abgebildet ist der Spannungsverlauf von der Außenoberfläche zur Innenoberfläche der Wand.

In einer bevorzugten Ausführungsform liegt in der Wand 11 des Behälters 1 ein Spannungsverlauf vor, welcher ausgehend von einer hohen Druckvorspannung auf der Außenoberfläche zur einer im Vergleich hierzu kleinen Zugspannung übergeht, für die gilt:

$$0,3*(CS \times DOL)/(t - DOL) < IST < 0,7*(CS \times DOL)/(t - DOL).$$

Hierdurch kann ein Behälter aus Glas zur Verfügung gestellt werden, der ein sehr vorteilhaftes Verhältnis von Festigkeitssteigerung mit einer nur sehr geringen, falls überhaupt vorhandenen Minderung gegenüber auftretenden inneren Druckanstiegen verbindet.

Bei diesem vorstehend dargestellten Verhältnis kann eine Reduzierung der Berstdruckbeständigkeit von höchstens 20 % hingenommen werden und können dennoch die hervorragenden Festigkeitsteigerungen erreicht werden, wie diese weiter oben unter Bezugnahme auf die Messungen unter Angabe von deren Ergebnissen mittels der jeweiligen 1%-Quantile vorgestellt wurden.

Hierbei kann ein zumindest abschnittsweiser Bereich einer Zugspannung an der Innenoberfläche der Wand von IST >= 0 MPa und IST <= 30 MPa, bevorzugt IST <= 20 MPa, besonders bevorzugt IST <= 15 MPa und ganz besonders bevorzugt IST <= 5 MPa betragen. Auch auf diese Weise kann sichergestellt werden, dass die Zugspannung aufgrund der Vorspannung nicht zu groß wird, so dass sich das Berstverhalten des Behälters 1 kaum oder vorzugsweise nicht verschlechtert.

Der Verlauf der Zugspannung ist in dem Beispiel dabei von der Mitte 35 der Wand des erfindungsgemäßen Behälters 1 bis hin zu der Innenoberfläche der Wand konstant, d.h. die Höhe der Zugspannung ist in der Mitte der Wand in etwa gleich der Höhe der Zugspannung an der Innenoberfläche der Wand. In einer bevorzugten Ausführungsform unterliegt die Höhe der Zugspannung in der Mitte der Wand bis zur Innenoberfläche der Wand nur einer geringen Schwankung, welche vorzugsweise in einem Bereich von +/- 10 %, bevorzugt von +/- 5 % liegt.

Der erfindungsgemäße Behälter zeichnet sich daher auch dadurch aus, dass nur die Außenoberfläche der Wand eine oberflächennahe druckvorgespannte Zone mit einer Dicke DOL umfasst, welche nicht mehr als 15 % in Bezug auf die Wandstärke, bevorzugt nicht mehr als 10 % und besonders bevorzugt nicht mehr als 8 % beträgt.

In einer ganz besonders bevorzugten Ausführungsform beträgt die Dicke der oberflächennahen druckvorgespannten Zone auf der Außenoberfläche der Wand nicht mehr als 6 % in Bezug auf die Dicke t der Wand. Bei einer Wandstärke von beispielsweise t = 1,6 mm beträgt die Dicke der oberflächennahen druckvorgespannten Zone demnach DOL = 96 $\mu$m. Hierdurch kann mit hoher Zuverlässigkeit erreicht werden, dass gerade bei einer chemischen Vorspannung derjenige Bereich, welcher infolge der Vorspannung in seiner Zusammensetzung verändert und mit Kaliumionen angereichert wird, nur die Außenoberfläche betrifft.

Der mittlere Bereich der Wand und ein innerer, von der Mitte der Wand zur Innenoberfläche der Wand hinreichender Bereich sind demnach vorzugsweise frei von zusätzlichen, durch das Vorspannen eingebrachten Alkalien, vorzugsweise Kaliumionen. Allgemein liegt eine Verteilung an von durch das Vorspannen eingebrachter Alkalien vor, welche von der Außenoberfläche zu der Innenoberfläche der Wand hin zumindest innerhalb eines Bereichs, welcher 0,5 $\mu$m von der Außenoberfläche entfernt ist bis zu einem Bereich, welcher 0,5 $\mu$m von der Innenoberfläche entfernt ist, monoton fallend ist.

An der Innenoberfläche der Wand beträgt der Gehalt an $K_2O$ und $Na_2O$ daher vorzugsweise nicht mehr als 10 %, bevorzugt nicht mehr als 9 % und besonders bevorzugt nicht mehr als 8 %. Gemessen wird dieser Gehalt erfindungsgemäß an der Innenoberfläche der Wand in einer mittleren Höhe vom Boden aus gesehen. Im Ergebnis liegt damit in der in Fig. 2 gezeigten Wand 11 ein Konzentrationsverlauf von durch Austausch eingebrachter Alkaliionen vor, welcher ausgehend von einem hohen Wert in der Nähe der Außenoberfläche der Wand hin zu einem niedrigen, Wert an der Innenoberfläche, abnimmt.

Demnach liegt der große Vorteil der Erfindung darin, dass die mit dem Medikament in Wechselwirkung stehende Innenoberfläche des Behälters chemisch unverändert erhalten bleibt und damit chemisch weiterhin inert ist. Dies ist insbesondere vorteilhaft für Behälter, welche für die Aufnahme eines kosmetischen, medizinischen oder pharmazeutischen Präparates vorgesehen sind.

Gleichzeitig kann die Festigkeit des erfindungsgemäßen Behälters gesteigert werden, so dass die Produktzuverlässigkeit des Behälters, insbesondere beim Transportieren und/oder Befüllen, deutlich verbessert werden kann. Auch bei einem Verschließen des Behälters, etwa mit einem Verschluss wie einem Stopfen, können hohe Innendrücke entstehen, die zu einem Bersten führen können. Auch hier kann die Zuverlässigkeit des erfindungsgemäßen Behälters verbessert werden.

Erfindungsgemäß kann ferner eine bezüglich der Festigkeit verbesserte pharmazeutische Primärverpackung aus Glas zur Verfügung gestellt werden, bei dem die mit dem Präparat, beispielsweise dem Medikament, in Kontakt kommende Innenoberfläche der Wand des Behälters chemisch unverändert ist gegenüber der Oberfläche eines nicht vorgespannten Behälters. Das Präparat, beispielsweise das Medikament, steht also weiterhin nur in Kontakt mit der ursprünglichen, unveränderten Glas-Oberfläche.

Je nach vorgesehenem Umfang des Vorspannens sind verschiedene Ausführungsformen für das Verfahren geeignet. Sollen etwa nur der Boden und/oder die Ferse und/oder die Seitenwand chemisch einseitig außenseitig vorgespannt werden, demnach also im Wesentlichen der in Fig. 1 als A bezeichnete Abschnitt des Behälters 1, so bietet es sich an, den Behälter 1 mit dem Boden voran in das Salzbad einzutauchen. Sollen ferner auch der sich oberhalb anschließende Abschnitt B des Behälters chemisch einseitig außenseitig vorgespannt werden, so kann der Behälter mit dem Boden voran tiefer in das Salzbad eingetaucht werden, wobei aber darauf zu achten ist, dass kein Salzbad in die Öffnung eindringt, um die Innenoberfläche des Behälters nicht chemisch zu verändern. Hierzu wird die Öffnung günstigerweise verschlossen, etwa mit einem Stopfen.

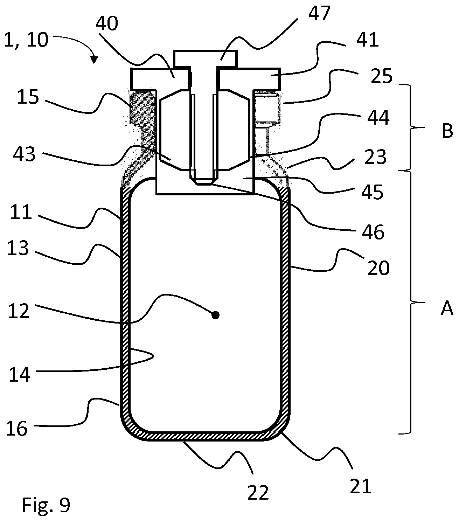

Ein beispielhafter Stopfen ist Figur 9 gezeigt, in welcher ein im Querschnitt im Wesentlichen T-förmiger, jeweils abschnittsweise zylindrischer Edelstahlkörper 40 mit einer seitlichen Auskragung 41 in die Öffnung des Behälters 1, insbesondere eines Fläschchens 10 eingesetzt ist. In seinem Inneren weist der Edelstahlkörper 40 eine Ausnehmung 42 auf, welche einen Seitenwandbereich 44 mit einer reduzierten Wanddicke von etwa 10 bis 100 μm Dicke aufweist. Der Seitenwandbereich 44 weist eine, in Figur 9 nur noch schwer zu erkennende, nach außen gewölbte Balligkeit auf, die dessen Einführung in den Behälter mit einer elastischen seitlichen Anlage in der Öffnung 17 am Behälter 1 gestattet.

Der Boden 45 des Edelstahlkörpers 40 weist eine Sacklochbohrung 46 mit einem Innengewinde auf, in welches das Außengewinde eines Gewindestifts 47, welcher ein seitlich auskragendes Kopfteil umfasst, eingreift.

Durch Verdrehen des Gewindestiftes 47 kann der Edelstahlkörper 40 gestaucht werden und kommt es mit zunehmender Verdrehung zu einer vermehrt dichtenden Anlage des Seitenwandbereichs 44 am Glas des Behälters 1 bis hin zu einer für das vorstehend beschriebene chemische Härten ausreichend fluiddichten Anlage. Diese Stellung einer fluiddichten Anlage ist in Figur 9 dargestellt.

Dieser Vorgang des Einfügens des Edelstahlkörpers sowie des Erzeugens einer fluiddichten Anlage kann jeweils manuell oder auch durch automatisierte Prozesswerkzeuge erfolgen.

Wird dieser Vorgang innerhalb eines automatisierten Fertigungsprozesses vollzogen, kann der Edelstahlkörper 40, insbesondere auch dessen seitliche Auskragung 41 als Halter für den Behälter 41 dienen, welcher bereits direkt nach der Heißformung an diesem angebracht wird und erst am Ende des Be- und Verarbeitungsprozesses, insbesondere erst nach einbringen von Vorspannungen, von diesem gelöst wird. Hierdurch kann der Behälter 1 vor fertigungs- oder transportbedingten mechanischen Belastungen von dessen Oberfläche sicher geschützt werden.

Eine andere Ausführungsform sieht vor, den Behälter kopfüber in einer Bewegungsrichtung parallel zur Längsachse des Behälters und senkrecht zur Oberfläche des Salzbades einzutauchen, so dass durch die sich in dem Hohlkörper befindliche Luft das Eindringen von Salzlösung in den Hohlkörper verhindert werden kann.


**Patentansprüche**

1. Behälter (1) aus Glas, insbesondere zur Aufnahme eines Präparates, umfassend einen
   Hohlkörper, der

   > ein Innenvolumen (12), insbesondere zur Aufnahme des Präparates aufweist,
   > wobei der Hohlkörper

   > > eine Wand (11) mit
   > > einer Innenoberfläche (14),
   > > an welche das Innenvolumen (12) des Hohlkörpers
   > > angrenzt, sowie
   > > eine der Innenoberfläche (14) gegenüberliegende Außenoberfläche (13) umfasst, wobei die Wand (11)
   > > zumindest in einem Teilbereich eine Zone mit einer Druckspannung umfasst,

   > wobei die Zone mit der Druckspannung
   > an die Außenoberfläche (13) angrenzend ausgebildet ist, wodurch die Außenoberfläche (13) zumindest in einem Teilbereich druckvorgespannt ist,
   > und **dadurch gekennzeichnet, dass**
   > die diesem Teilbereich gegenüberliegende Innenoberfläche (14) der Wand (11) frei von Druckspannungen ist und vorzugsweise unter Zugspannung steht.

2. Behälter (1), welcher Glas umfasst oder aus Glas besteht, nach vorstehendem Anspruch,
   wobei in der Mitte der Wand (11), somit in der Mitte zwischen der Außenoberfläche (13) und der Innenoberfläche (14) für die Zugspannung CT gilt CT >= 0 MPa und CT <= 5 MPa.

3. Behälter (1) nach einem der beiden vorstehenden Ansprüche, bei welchem die Wand (11) des Hohlkörpers wenigstens eine Öffnung (17), und/oder einen Rollrand (25) und/oder einen Hals (24) und/oder eine Schulter (23) und/oder eine Seitenwand (20) und/oder eine Ferse (21) und/oder einen Boden (22) ausbildet.

4. Behälter (1) nach vorstehendem Anspruch, bei welchem eine oder die die Druckspannung umfassende Zone jeweils benachbart zur Schulter (23), zum Hals (24), zum Rollrand (25), zur Seitenwand (20), zur Ferse (21) und/oder zum Boden (22) und/oder
angrenzend an die Schulter (23), den Hals (24), den Rollrand (25), die Seitenwand (20), die Ferse (21) und/oder den Boden (22) ausgebildet ist.

5.  Behälter (1) nach einem der vorstehenden Ansprüche, **dadurch gekennzeichnet, dass** durch die Zone mit der Druckspannung, welche in der Wand (11) an die Außenoberfläche (13) angrenzend ausgebildet ist, Druckspannungen im Bereich der Außenoberfläche (13) ausgebildet sind, insbesondere bis zu einer Tiefe DOL ausgebildet sind, und in radialer Richtung ein bezüglich der Mitte der Wand (11) asymmetrisches Profil des Verlaufes der Spannung von der Außenoberfläche (13) zu der gegenüberliegenden Innenoberfläche (14) in der Wand (11) vorliegt.

6.  Behälter (1) nach einem der vorstehenden Ansprüche, **dadurch gekennzeichnet, dass** in dem Bereich mit Druckspannungen in der Außenoberfläche (13) die Spannung IST, Inner Surface Tension, an der diesem Bereich gegenüberliegenden Innenoberfläche (14) der Wand (11) als Zugspannung ausgebildet ist und für diese Zugspannung IST gilt, IST >= 0 MPa und IST <= 30 MPa, bevorzugt IST <= 20 MPa, besonders bevorzugt IST <= 15 MPa und ganz besonders bevorzugt IST <= 5 MPa beträgt.

7.  Behälter (1) nach einem der vorstehenden Ansprüche, **dadurch gekennzeichnet, dass** in dem Bereich mit Druckspannungen in der Außenoberfläche (13) für die Spannung, insbesondere Zugspannung an der gegenüberliegenden Innenoberfläche (14) der Wand (11) gilt:

$$0,3*(CS \times DOL)/(t - DOL) < IST < 0,7*(CS \times DOL)/(t - DOL),$$

wobei DOL die Tiefe der Zone, in welcher Druckspannungen existieren, bezeichnet,

t die Dicke der Wand (11) und
CS die Spannungen, insbesondere Druckspannungen an der Außenoberfläche (13) bezeichnet.

8.  Behälter (1) nach einem der vorstehenden Ansprüche, **dadurch gekennzeichnet, dass** in dem Bereich mit Druckspannungen in der Außenoberfläche (13) die Höhe der Zugspannung in der Mitte der Wand (11) in etwa gleich der Höhe der Zugspannung an der gegenüberliegenden Innenoberfläche (14) der Wand (11) ist, und wobei vorzugsweise die Höhe der Zugspannung in der Mitte der Wand (11) bis zur Innenoberfläche (14) der Wand (11) nur einer geringen Schwankung in einem Bereich von +/- 10 %, bevorzugt von +/- 5 %, unterliegt.

9.  Behälter (1) nach einem der vorstehenden Ansprüche, **dadurch gekennzeichnet, dass** bei dem Bereich mit einer Druckspannung in der Außenoberfläche (13) die oberflächennahe druckvorgespannte Zone eine Dicke oder Tiefe DOL umfasst, welche nicht mehr als 15 % in Bezug auf die Dicke der Wand (11) oder Wandstärke in diesem Bereich, bevorzugt nicht mehr als 10 % und besonders bevorzugt nicht mehr als 8 % und ganz besonders bevorzugt nicht mehr als 6 % beträgt.

10. Behälter (1) nach einem der vorstehenden Ansprüche, **dadurch gekennzeichnet, dass** bei einer chemischen eingebrachten Vorspannung in der Zone mit Druckspannung die Verteilung des in das Glas bei der chemischen Vorspannung eingebrachten Alkali-Elements, bevorzugt Kalium, von der Außenoberfläche (13) zu der gegenüberliegenden Innenoberfläche (14) der Wand (11) hin innerhalb eines Bereichs, welcher 0, 5 $\mu$m von der Außenoberfläche (13) entfernt ist bis zu einem Bereich, welcher 0,5 $\mu$m von der Innenoberfläche (14) entfernt ist, monoton fallend ist.

11. Behälter (1) nach einem der vorstehenden Ansprüche, **dadurch gekennzeichnet, dass** zumindest in dem Bereich mit einer Druckspannung in der Außenoberfläche (13) das Glas an der gegenüberliegenden Innenoberfläche (14) der Wand (11) bis in einer Tiefe von 100 $\mu$m, bevorzugt bis zu 150 $\mu$m und besonders bevorzugt bis zu 200 $\mu$m, keine zusätzlich in das Glas eingebrachte Konzentration einer Alkali-Spezies gegenüber dem Glas in der Mitte der Wand (11) aufweist.

12. Behälter (1) nach einem der vorstehenden Ansprüche, **dadurch gekennzeichnet, dass** zumindest an der dem Bereich mit einer Druckspannung gegenüberliegenden Innenoberfläche (14) der Wand (11) der Gehalt an $K_2O$ + $Na_2O$ im Mittel bis zu einer Tiefe von 500 $\mu$m nicht mehr als 13 Gew.-%, bevorzugt nicht mehr als 9 % und besonders bevorzugt nicht mehr als 8 % beträgt.

**13.** Behälter (1) nach einem der vorstehenden Ansprüche, **dadurch gekennzeichnet, dass** in dem Bereich mit einer Druckspannung in der Außenoberfläche (13) diese Druckspannung thermisch oder bevorzugt chemisch erzeugt ist.

**14.** Verfahren zum chemischen Vorspannen eines Behälters (1) aus Glas, insbesondere zur Aufnahme eines Präparates, zur Bereitstellung eines Behälters nach einem der vorstehenden Ansprüche, bei welchem ein Hohlkörper,

der ein Innenvolumen insbesondere zur Aufnahme des Präparates definiert, wobei der Hohlkörper eine Wand (11) mit einer Innenoberfläche (14), welche zum Innenvolumen des Hohlkörpers weist, sowie eine der Innenoberfläche (14) gegenüberliegende Außenoberfläche (13) umfasst,

mit dem Boden voran bis zu einer vorgesehenen Tiefe in ein Salzbad, umfassend Kaliumnitrat ($KNO_3$), getaucht wird, wobei kein Salzbad in die Öffnung eindringt, um die Innenoberfläche (14) des Behälters (1) nicht chemisch zu verändern, vorzugsweise bei erhöhter Temperatur von wenigstens 400 °C aber unterhalb von Tg des Glases, über eine Dauer von 1 bis 24 Stunden, vorzugsweise von 1 bis 8 Stunden, um an der Außenoberfläche (13) zumindest abschnittsweise eine Druckspannung zu erzeugen, so dass die außenseitige Wand (11) zumindest abschnittsweise druckvorgespannt ist.

**15.** Verfahren zum chemischen Vorspannen eines Behälters (1) aus Glas, insbesondere zur Aufnahme eines Präparates, zur Bereitstellung eines Behälters nach einem der vorstehenden Ansprüche 1 bis 13,

bei welchem ein Hohlkörper, der ein Innenvolumen zur Aufnahme des Präparates definiert,

wobei der Hohlkörper eine Wand (11) mit einer Innenoberfläche (14), welche zum Innenvolumen des Hohlkörpers weist, sowie eine der Innenoberfläche (14) gegenüberliegend angeordneten Außenoberfläche (13) umfasst, welche zur Umgebung weist, und

bei welchem der Behälter mit der Öffnung voran bis zu einer vorgesehenen Tiefe in ein Salzbad, umfassend Kaliumnitrat ($KNO_3$), getaucht wird, wobei kein Salzbad in die Öffnung eindringt, um die Innenoberfläche (14) des Behälters (1) nicht chemisch zu verändern, vorzugsweise bei erhöhter Temperatur von wenigstens 400 °C aber unterhalb von Tg des Glases, über eine Dauer von 1 bis 24 Stunden, vorzugsweise von 1 bis 8 Stunden, um auf der Außenoberfläche (13) der Wand (11) zumindest abschnittsweise eine außenseitig angeordnete Schicht mit einer Druckspannung zu erzeugen, so dass die außenseitige Wand zumindest abschnittsweise druckvorgespannt ist.

**Claims**

**1.** A container (1) made of glass, in particular for holding a preparation, comprising a hollow body which has an inner volume (12), in particular for holding the preparation;

the hollow body having

a wall (11) with an inner surface (14) adjacent to the inner volume (12) of the hollow body; and an outer surface (13) opposite the inner surface (14);

wherein the wall (11) comprises a compressive stress zone at least in a portion thereof;
wherein the compressive stress zone is provided adjacent to the outer surface (13), whereby the outer surface (13) is toughened by virtue of compressive stress at least in a portion thereof; and
**characterized in that**
the inner surface (14) of the wall (11) opposite said portion is free of compressive stresses and is preferably under tensile stress.

**2.** The container (1) comprising glass or made of glass according to the preceding claims, wherein in the center of the wall (11), that is half way between the outer surface (13) and the inner surface (14), the following applies to the tensile stress CT: $CT \geq 0$ MPa and $CT \leq 5$ MPa.

**3.** The container (1) according to any one of the two preceding claims, wherein the wall (11) of the hollow body defines at least one opening (17), and/or a rolled edge (25) and/or a neck (24) and/or a shoulder (23) and/or a lateral wall (20) and/or a heel (21) and/or a base (22).

4.  The container (1) according to the preceding claim, wherein one or the zone exhibiting the compressive stress is adjacent to the shoulder (23), to the neck (24), to the rolled edge (25), to the lateral wall (20), to the heel (21) and/or to the base (22); and/or
    is formed adjoining to at least one of the shoulder (23), the neck (24), the rolled edge (25), the lateral wall (20), the heel (21) and/or the base (22).

5.  The container (1) according to any one of the preceding claims, **characterized in that** the compressive stress zone provided in the wall (11) adjacent to the outer surface (13) defines compressive stresses close to the outer surface (13), in particular to a depth DOL, and wherein a stress profile within the wall (11) in the radial direction from the outer surface (13) to the opposite inner surface (14) is asymmetric with respect to the center of the wall (11).

6.  The container (1) according to any one of the preceding claims, **characterized in that** in the portion having compressive stresses at the outer surface (13), a stress IST, Inner Surface Tension, at the inner surface (14) of the wall (11) opposite this portion is in the form of a tensile stress and the following applies for this tensile stress IST: IST $\geq$ 0 MPa and IST $\leq$ 30 MPa, preferably IST $\leq$ 20 MPa, more preferably IST $\leq$ 15 MPa and most preferably IST $\leq$ 5 MPa.

7.  The container (1) according to any one of the preceding claims, **characterized in that** in the portion having compressive stresses at the outer surface (13), the following applies for the stress, in particular tensile stress at the opposite inner surface (14) of the wall (11):

$$0.3 * (CS \times DOL) / (t - DOL) < IST < 0.7 * (CS \times DOL) / (t - DOL),$$

    wherein DOL is the depth of the zone in which compressive stresses exist, t is the thickness of the wall (11) and CS designates the stresses, in particular compressive stresses at the outer surface (13).

8.  The container (1) according to any one of the preceding claims, **characterized in that** in the portion having compressive stresses at the outer surface (13), the magnitude of tensile stress in the center of the wall (11) is approximately equal to the magnitude of tensile stress at the opposite inner surface (14) of the wall (11), and wherein, preferably, the magnitude of tensile stress in the center of the wall (11) up to the inner surface (14) of the wall (11) varies only slightly in a range of $\pm 10$ %, preferably $\pm 5$ %.

9.  The container (1) according to any one of the preceding claims, **characterized in that** in the portion having compressive stress at the outer surface (13), the near-surface compressive stress zone has a thickness or depth DOL which is not more than 15 % of the thickness of the wall (11) or wall thickness in this portion, preferably not more than 10 % and more preferably not more than 8 % and most preferably not more than 6 %.

10. The container (1) according to any one of the preceding claims, **characterized in that** in the case where the compressive stress zone has been established by chemical toughening, the distribution of the alkali element, preferably potassium, which has been introduced into the glass during chemical toughening, is monotonically decreasing from the outer surface (13) toward the opposite inner surface (14) of the wall (11) within a range 0.5 $\mu$m from the outer surface (13) to a range 0.5 $\mu$m from the inner surface (14).

11. The container (1) according to any one of the preceding claims, **characterized in that** at least in the portion having compressive stress at the outer surface (13), the glass on the opposite inner surface (14) of the wall (11) has no concentration of an alkaline species additionally introduced into the glass up to a depth of 100 $\mu$m, preferably up to 150 $\mu$m and most preferably up to 200 $\mu$m compared to the glass in the center of the wall (11).

12. The container (1) according to any one of the preceding claims, **characterized in that** at least at the inner surface (14) of the wall (11) opposite the portion having a compressive stress, the average content of $K_2O$ + $Na_2O$ is not more than 13 wt%, preferably not more than 9 wt% and most preferably not more than 8 wt% up to a depth of 500 $\mu$m.

13. The container (1) according to any one of the preceding claims, **characterized in that** in the portion having a compressive stress at the outer surface (13), this compressive stress has been produced thermally or preferably chemically.

14. A method for chemically toughening a container (11) made of glass, in particular for holding a preparation, for providing a container according to any one of the preceding claims,

wherein a hollow body which defines an inner volume in particular for holding the preparation, the hollow body having a wall (11) with an inner surface (14) facing the inner volume of the hollow body and an outer surface (13) opposite said inner surface (14), is immersed bottom first in a salt bath comprising potassium nitrate ($KNO_3$) to a predetermined depth such that no salt bath enters the opening so as to not chemically alter the inner surface (14) of the container (1), preferably at an elevated temperature of at least 400 °C but below the $T_g$ of the glass, for a time duration of 1 to 24 hours, preferably 1 to 8 hours, in order to produce compressive stress at the outer surface (13) at least in portions thereof, so that the outer wall (11) is toughened by virtue of the compressive stress at least in portions thereof.

15. A method for chemically toughening a container (1) made of glass, in particular for holding a preparation, for providing a container according to any one of the preceding claims 1 to 13, in which a hollow body defines an inner volume for holding the preparation, the hollow body having a wall (11) with an inner surface (14) facing the inner volume of the hollow body and an outer surface (13) opposite said inner surface (14) and facing the environment; and wherein the container is immersed, with the opening first, in a salt bath comprising potassium nitrate ($KNO_3$) to a predetermined depth and such that no salt bath enters the opening so as to not chemically alter the inner surface (14) of the container (1), preferably at an elevated temperature of at least 400 °C but below the $T_g$ of the glass, for a time duration of 1 to 24 hours, preferably 1 to 8 hours, in order to produce an outside compressive stress layer at the outer surface (13) of the wall (11) at least in portions thereof, so that the wall is toughened at its outer surface, at least in portions thereof, by virtue of the compressive stress.

## Revendications

1. Récipient (1) en verre, en particulier pour recevoir une préparation, incluant un

   corps creux qui
   comporte un volume intérieur (12), en particulier pour recevoir la préparation,
   le corps creux
   incluant une paroi (11) avec

   une surface intérieure (14)
   à laquelle le volume intérieur (12) du corps creux est adjacent, ainsi que
   une surface extérieure (13) située à l'opposé de la surface intérieure (14),

   la paroi (11) incluant, au moins dans une région partielle, une zone avec une contrainte de compression, la zone avec la contrainte de compression étant conçue de manière adjacente à la surface extérieure (13), la surface extérieure (13) étant précontrainte en compression au moins dans une région partielle,
   et
   **caractérisé en ce que**
   la surface intérieure (14) de la paroi (11), située à l'opposé de cette région partielle, est exempte de contraintes de compression et est de préférence sous contrainte de traction.

2. Récipient (1), qui inclut du verre ou est constitué de verre, selon la revendication précédente, au milieu de la paroi (11), donc au milieu entre la surface extérieure (13) et la surface intérieure (14), la contrainte de traction CT étant CT >= 0 Mpa et CT <= 5 Mpa.

3. Récipient (1) selon une des deux revendications précédentes, dans lequel la paroi (11) du corps creux forme au moins une ouverture (17), et/ou une bague (25) et/ou un col (24) et/ou une épaule (23) et/ou une paroi latérale (20) et/ou un jable (21) et/ou un fond (22).

4. Récipient (1) selon la revendication précédente, dans lequel une zone ou la zone incluant la contrainte de compression est conçue respectivement au voisinage de l'épaule (23), du col (24), de la bague (25), de la paroi latérale (20), du jable (21) et/ou du fond (22) et ou de manière adjacente à l'épaule (23), au col (24), à la bague (25), à la paroi latérale (20), au jable (21) et/ou au fond (22).

5. Récipient (1) selon une des revendications précédentes, **caractérisé en ce que**, du fait de la zone avec la contrainte de compression qui est conçue dans la paroi (11) de manière adjacente à la surface extérieure (13), des contraintes de compression sont créées dans la région de la surface extérieure (13), sont créées en particulier jusqu'à une profondeur DOL, et, dans la direction radiale, un profil asymétrique de variation de la contrainte par rapport au centre de la paroi (11) existe dans la paroi (11) de la surface extérieure (13) vers la surface intérieure (14) située à l'opposé.

6. Récipient (1) selon une des revendications précédentes, **caractérisé en ce que**, dans la zone avec des contraintes de compression dans la surface extérieure (13), la contrainte IST, Inner Surface Tension, est créée en tant que contrainte de traction au niveau de la surface intérieure (14) de la paroi (11) située à l'opposé de cette région, et on a pour cette contrainte de traction IST, IST >= 0 MPa et IST <= 30 MPa, préférentiellement IST <= 20 MPa, particulièrement préférentiellement IST <= 15 MPa et tout particulièrement préférentiellement, IST <= 5 MPa.

7. Récipient (1) selon une des revendications précédentes, **caractérisé en ce que**, dans la zone avec des contraintes de compression dans la surface extérieure (13), on a pour la contrainte, en particulier la contrainte de traction au niveau de la surface intérieure (14) de la paroi (11) située à l'opposé :

```
0,3*(CS x DOL) / (t - DOL)<IST< 0,7* (CS x DOL) /(t -
DOL)
```

DOL désignant la profondeur de la zone dans laquelle existent des contraintes de compression,

t désignant l'épaisseur de la paroi (11) et
CS désignant les contraintes, en particulier les contraintes de compression au niveau de la surface extérieure (13).

8. Récipient (1) selon une des revendications précédentes, **caractérisé en ce que**, dans la région avec des contraintes de compression dans la surface extérieure (13), le niveau de la contrainte de traction au milieu de la paroi (11) est approximativement égal au niveau de la contrainte de traction sur la surface intérieure (14) de la paroi (11) située à l'opposé, et de préférence le niveau de la contrainte de traction au milieu de la paroi (11) jusqu'à la surface intérieure (14) de la paroi (11) est soumis seulement à une faible variation dans une plage de +/- 10 %, préférentiellement de +/- 5 %.

9. Récipient (1) selon une des revendications précédentes, **caractérisé en ce que**, dans la région avec une contrainte de compression dans la surface extérieure (13), la zone précontrainte en compression proche de la surface inclut une épaisseur ou une profondeur DOL qui n'est pas supérieure à 15 % par rapport à l'épaisseur de la paroi (11) ou à l'épaisseur de paroi dans cette région, préférentiellement pas supérieure à 10 % et particulièrement préférentiellement pas supérieure à 8 % et tout particulièrement préférentiellement pas supérieure à 6 %.

10. Récipient (1) selon une des revendications précédentes, **caractérisé en ce que**, dans le cas d'une précontrainte exercée chimiquement dans la zone avec contrainte de compression, la répartition de l'élément alcalin, préférentiellement du potassium, introduit dans le verre lors de la précontrainte chimique est monotone décroissante de la surface extérieure (13) vers la surface intérieure (14) de la paroi (11) située à l'opposé, à l'intérieur d'une plage qui est distante de 0, 5 $\mu$m de la surface extérieure (13) jusqu'à une plage qui est distante de 0,5 $\mu$m de la surface intérieure (14).

11. Récipient (1) selon une des revendications précédentes, **caractérisé en ce qu'**au moins dans la région avec une contrainte de compression dans la surface extérieure (13), le verre au niveau de la surface intérieure (14) de la paroi (11) située à l'opposé ne présente, jusqu'à une profondeur de 100 $\mu$m, préférentiellement jusqu'à 150 $\mu$m et particulièrement préférentiellement jusqu'à 200 $\mu$m, aucune concentration d'une espèce alcaline introduite dans le verre à titre supplémentaire par rapport au verre au milieu de la paroi (11).

12. Récipient (1) selon une des revendications précédentes, **caractérisé en ce qu'**au moins sur la surface intérieure (14) de la paroi (11) située à l'opposé de la région avec une contrainte de compression, la teneur en $K_2O$ + $Na_2O$ en moyenne jusqu'à une profondeur de 500 $\mu$m n'est pas supérieure à 13 % en poids, préférentiellement pas supérieure à 9 % et particulièrement préférentiellement pas supérieure à 8 %.

13. Récipient (1) selon une des revendications précédentes, **caractérisé en ce que**, dans la région avec une contrainte de compression dans la surface extérieure (13), cette contrainte de compression est générée thermiquement ou préférentiellement chimiquement.

**14.** Procédé de précontrainte chimique d'un récipient (1) en verre, en particulier pour recevoir une préparation, pour la fourniture d'un récipient selon une des revendications précédentes,

dans lequel un corps creux

qui définit un volume intérieur en particulier pour recevoir la préparation, le corps creux incluant une paroi (11) avec une surface intérieure (14) qui est tournée vers le volume intérieur du corps creux, ainsi qu'une surface extérieure (13) située à l'opposé de la surface intérieure (14)

est préalablement plongé par le fond jusqu'à une profondeur prévue dans un bain salin, incluant du nitrate de potassium ($KNO_3$), aucun bain salin ne pénétrant dans l'ouverture afin de ne pas modifier chimiquement la surface intérieure (14) du récipient (1), de préférence à une température augmentée d'au moins 400 °C mais inférieure à la Tg du verre, pendant une durée de 1 à 24 heures, de préférence de 1 à 8 heures, afin de générer au moins par portions une contrainte de compression au niveau de la surface extérieure (13), de sorte que la paroi côté extérieur (11) est précontrainte en compression au moins par portions.

**15.** Procédé de précontrainte chimique d'un récipient (1) en verre, en particulier pour recevoir une préparation, pour la fourniture d'un récipient selon une des revendications précédentes 1 à 13,

dans lequel un corps creux qui définit un volume intérieur en particulier pour recevoir la préparation, le corps creux incluant une paroi (11) avec une surface intérieure (14) qui est tournée vers le volume intérieur du corps creux, ainsi qu'une surface extérieure (13) située à l'opposé de la surface intérieure (14) qui est tournée vers l'environnement, est préalablement plongé jusqu'à une profondeur prévue dans un bain salin, incluant du nitrate de potassium ($KNO_3$), aucun bain salin ne pénétrant dans l'ouverture afin de ne pas modifier chimiquement la surface intérieure (14) du récipient (1), de préférence à une température augmentée d'au moins 400 °C mais inférieure à la Tg du verre, pendant une durée de 1 à 24 heures, de préférence de 1 à 8 heures, afin de générer sur la surface extérieure (13) de la paroi (11), au moins par portions, une couche disposée côté extérieur avec une contrainte de compression, de façon que la paroi côté extérieur soit précontrainte en compression au moins par portions.

Fig. 2

Fig. 1

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013130721 A1
- DE 202012012875 U1
- DE 102016113826 A1
- DE 102016113825 A1